# EUROPEAN PATENT SPECIFICATION

(11) **EP 1 422 384 B1**
(45) Date of publication and mention of the grant of the patent: **08.07.2009**
(21) Application number: 02755807.1
(22) Date of filing: 02.08.2002
(51) Int. Cl.: F01D 17/16

(54) **METHOD OF MANUFACTURING COMPONENT MEMBER IN VGS TYPE TURBO CHARGER AND COMPONENT MEMBER MANUFACTURED BY THE METHOD**
VERFAHREN ZUR HERSTELLUNG EINER KOMPONENTE IN EINEM TURBOLADER MIT VARIABLER GEOMETRIE UND DURCH DAS VERFAHREN HERGESTELLTE KOMPONENTE
PROCEDE DE FABRICATION D'ELEMENT CONSTITUTIF DE TURBOCOMPRESSEUR DU TYPE VGS ET ELEMENT CONSTITUTIF FABRIQUE SELON LEDIT PROCEDE

(30) Priority: 03.08.2001 JP 2001235745; 03.08.2001 JP 2001235766; 03.08.2001 JP 2001235780; 03.08.2001 JP 2001235788
(43) Date of publication of application: 26.05.2004
(73) Proprietor: Akita Fine Blanking Co., Ltd., Shimada-shi, Shizuoka 427-0103 (JP)
(72) Inventor: OHISHI, Shinjiroh, Shimada-shi, Shizuoka 427-0017 (JP)
(74) Representative: Hague, Alison Jane
(86) International application number: PCT/JP2002/007943
(87) International publication number: WO 2003/014531

(56) References cited:
- WO-A-98/46862
- CH-A5- 626 948
- DE-A1- 19 751 729
- GB-A- 1 353 219
- GB-A- 2 041 805
- JP-A- 2 011 232
- JP-A- 5 161 924
- JP-A- 6 261 489
- JP-A- 7 060 374
- JP-A- 7 214 191
- JP-A- 9 143 552
- JP-A- 10 156 478
- JP-A- 59 141 331
- JP-A- 63 203 241
- JP-A- 2000 000 627
- JP-A- 2000 015 379
- JP-A- 2000 064 846
- JP-A- 2000 064 846
- JP-A- 2000 210 737
- JP-U- 2 059 826
- JP-U- 4 108 921
- JP-U- 51 085 378
- JP-Y1- 36 010 845
- US-A- 3 887 976
- US-A- 4 198 884
- US-A- 5 235 881
- US-A- 5 339 523

## Description

The present invention relates to a VGS turbocharger for use in an automobile engine or the like, and more particularly to a novel method of efficiently manufacturing a component member of the exhaust gas guide assembly incorporated therein by various engineering improvements applied thereto depending on the forming method and formed shape.

A turbocharger (see for example JP-A-2000 064846) is known as a supercharger used as means for improving the power output and the performance of an automobile engine. The turbocharger is an apparatus in which a turbine is driven by the exhaust energy of the engine to rotate a compressor with the power of the turbine, whereby the engine is supercharged to have more air fed into it than fed into it by natural suction. In the case of an engine capable of running at up to a high rotational speed region, when the engine is running at low rotational speeds, the exhaust turbine of the turbocharger hardly functions due to the reduced flow rate of the exhaust gas, so that the engine can not avoid giving a slow-moving feeling until the exhaust turbine runs efficiently, and necessitating a subsequent time or a so-called turbo-lag before the turbine rapidly reaches the full-running state. Furthermore, in the case of a diesel engine which runs inherently at low rotational speeds, there is a disadvantage that it is difficult to produce an effect of the turbocharger.

Therefore, a VGS turbocharger that works efficiently even when the engine is running at low rotational speeds has been developed. The turbocharger of this type is adapted to obtain a high power output when the engine is running at low rotational speeds by throttling flow of exhaust gas at a low flow rate with a plurality of adjustable blades (vanes) disposed on an outer periphery of the exhaust turbine to increase the velocity of the exhaust gas and increase work of an exhaust turbine. For this reason, in the VGS turbocharger, an adjusting mechanism for the adjustable blades are required additionally, and it is required that the associated constituting parts be formed to have a complicated shape or the like in comparison with those of the conventional one.

It has been common that, when a component member of the exhaust gas guide assembly for controlling the exhaust gas flow rate such as adjustable blades or turbine frame rotatably holding the adjustable blades in such a VGS turbocharger is manufactured, a metal material (or a shaped material) having a starting form for the component member is first formed, for example, in accordance with a precision casting method represented by a lost wax casting method, a metal injection molding method or the like, and the shaped material is then suitably subjected to cutting or the like, to thereby finish the turbine frame to have a desired shape and dimensions.

However, such a machining method has the following inconveniences. The member surface in this type of turbo apparatus is naturally exposed to a high-temperature exhaust gas atmosphere as the apparatus is designed to use the energy of exhaust gas introduced thereinto. Since the exhaust gas contains constituents that can corrode the metal raw material, heat-resistant stainless steel with excellent heat and acid resistance such as SUS310S is used for various component members. However, such a raw material is generally difficult to machine and therefore requires a long machining time, resulting in much expense in time. Incidentally, since 10 to 15 adjustable blades and receiving holes for rotatably holding the adjustable blades are required for each turbocharger, it is necessary to manufacture 300,000 to 400,000 blades (form 300,000 to 400,000 holes) a month assuming the monthly automobile production volume of 30,000, which is far beyond what can be accomplished with machining.

Under such circumstances, elimination of machining as soon as possible from manufacturing steps is a challenge to be tackled for mass production of component member and exhaust gas guide assembly and, by extension, VGS turbocharger. In manufacturing a component member, press forging using a punch and die as main components is coming into use. However, component members of the exhaust gas guide assembly are difficult to press-form with a die due to heat-resistance thereof as described above, making press forging with a die difficult to carry out and not readily feasible. In light of the foregoing, the assignee has achieved technical improvements and developments to make forming with a die easier to perform as by taking into consideration formed shape, forming method or forming condition.

By way of explanation, there is described herein a method of manufacturing a component member for a VGS turbocharger, wherein the turbocharger comprises an exhaust gas guide assembly in which a plurality of adjustable blades (1) are rotatably held at the outside of an outer periphery of an exhaust turbine wheel by a turbine frame, the exhaust gas guide assembly being incorporated in the VGS turbocharger, and wherein exhaust gas discharged from an engine at a relatively low flow rate is suitably throttled by the adjustable blades to increase the velocity of the exhaust gas so that the exhaust turbine wheel is rotated by energy of the exhaust gas and a compressor directly coupled to the exhaust turbine wheel feeds more air into the engine than is fed into it by natural suction, whereby a high output power of the engine is obtained at low rotational speeds, characterized in that: in manufacturing a component member of the exhaust gas guide assembly, the component member is the turbine frame; and receiving holes for rotatably holding the respective adjustable blades in the turbine frame are formed in such a manner that preparatory holes having a diameter equal to or smaller than that of the receiving holes in a finished state are formed and then the receiving holes are each finished by pressing a steel ball having a diameter substantially equal to that of the receiving holes in the finished state into the preparatory holes, to thereby achieve a desired accuracy of the finished receiving holes in diameter and a desired surface roughness of inner surfaces thereof.

Accordingly, it is possible to finish the receiving holes of the turbine frame for rotatably holding the adjustable blades with a high accuracy in both hole diameter and inner surface roughness without machining. This ensures stability in adjustable blade rotation for more reliable exhaust flow rate control and contributes to improved performance of the exhaust gas guide assembly and, by extension, the VGS turbocharger. It is also possible to finish the plurality of receiving holes with a high accuracy without machining, thus making mass production of high-quality turbine frame more feasible.

In addition to the above, the steel ball for finishing the receiving holes may be integrally formed on a distal end of a punch portion which presses-in the steel ball.

Accordingly, a steel ball for finishing the receiving holes of the turbine frame is formed integrally with a punch that pushes the steel ball, providing improved ease of handling as compared with a punch and steel ball that are separate from each other. This ensures reduced time for steel ball detachment/reattachment and eliminates the likelihood of steel ball loss. Additionally, the steel ball is easy to handle particularly if the receiving holes are relatively long (e.g., 30 mm or so).

Furthermore, in addition to the above, the turbine frame may integrally include a boss portion and a flange portion, a starting material of the turbine frame being a metal shaped material that serves as a starting form of the turbine frame; precision casting or metal injection molding is used to form the shaped material; and the preparatory holes for the receiving holes may be formed concurrently in a stage of forming the shaped material.

Accordingly, preparatory holes are formed concurrently in the shaped material forming stage, making the step of forming the preparatory holes unnecessary and thereby contributing to reduced step count. It is also possible to completely eliminate time-consuming machining from all steps of forming the receiving holes, thus making mass production of high-quality turbine frame more feasible.

In addition to the above, the steel ball for finishing, the receiving holes may be provided on a side portion thereof with convex portions for thrusting away metal raw material in the inner surfaces of the preparatory holes in a centrifugal direction; and when the receiving holes are finished, the steel ball may be pressed into each of the preparatory holes while being rotated.

Accordingly, the receiving holes are finished by rotating the steel ball having convex portions formed on the side portion thereof while inserting the ball into the preparatory holes, thrusting away the metal material (excess thickness) in the pressing and centrifugal directions in the preparatory holes and thereby resulting in effective finishing.

By further way of explanation, there is described a method of manufacturing a component member for a VGS turbocharger, wherein the turbocharger comprises an exhaust gas guide assembly in which a plurality of adjustable blades are rotatably held at the outside of an outer periphery of an exhaust turbine wheel by a turbine frame, the exhaust gas guide assembly being incorporated in the VGS turbocharger, and wherein exhaust gas discharged from an engine at a relatively low flow rate is suitably throttled by the adjustable blades to increase the velocity of the exhaust gas so that the exhaust turbine wheel is rotated by energy of the exhaust gas and a compressor directly coupled to the exhaust turbine wheel feeds more air into the engine than is fed into it by natural suction, whereby a high output power of the engine is obtained at low rotational speeds, characterized in that: in manufacturing a component member of the exhaust gas guide assembly, the component member is the turbine frame; receiving holes for rotatably holding the respective adjustable blades in the turbine frame are formed in such a manner that prior to forming of preparatory holes having a diameter equal to or smaller than that of the receiving holes in a finished state, preliminary holes having a diameter even smaller than that of the preparatory holes are formed; and when the receiving holes are finished, a steel ball having a diameter substantially equal to that of the receiving holes in the finished state is pressed into each of the preparatory holes, to thereby achieve a desired accuracy of the finished receiving holes in diameter and a desired surface roughness of inner surfaces thereof.

Accordingly, the receiving holes for rotatably holding the adjustable blades are finished by first opening the preliminary holes and then reforming the preliminary holes into the preparatory holes and further pressing the steel ball into the preparatory holes. This eliminates the need for machining for finishing, thus ensuring a high accuracy in both hole diameter and inner surface roughness in the receiving holes. This also ensures stability in adjustable blade rotation for more reliable exhaust flow rate control and contributes to improved performance of the exhaust gas guide assembly and, by extension, the VGS turbocharger. Further, the plurality of receiving holes can be finished with a high accuracy without machining, thus allowing efficient manufacture of high-quality turbine frame.

In addition to the above, the preparatory holes may be formed by performing fine blanking on the preliminary holes.

Accordingly, the preparatory holes are formed (reformed) at locations where the preliminary holes smaller than the preparatory holes have already been formed by fine blanking (FB), requiring less force for the FB and thereby making feasible concurrent FB at a plurality of locations. The preparatory holes can be formed by the FB more reliably and with high accuracy, thus making it possible to properly handle, in particular, thick flange portion and long FB length (e.g., about 30 mm).

In addition to the above, the turbine frame may integrally include a boss portion and a flange portion, a starting material of the turbine frame being a metal shaped material that serves as a starting form of the turbine frame; precision casting or metal injection molding may be used to form the shaped material; and the preliminary holes may be formed concurrently in a stage of forming the shaped material.

Accordingly, the preliminary holes are formed concurrently in the shaped material forming stage, making the step of forming the preliminary holes unnecessary and thereby contributing to reduced step count. It is also possible to completely eliminate time-consuming machining from all steps of forming the receiving holes, that is, the steps of forming the preliminary holes, reforming the preliminary holes into the preparatory holes and finishing the preparatory holes into the receiving holes in a finished state, thus making mass production of high-quality turbine frame more feasible.

By further way of explanation; there is described a method of manufacturing a component member for a VGS turbocharger, wherein the turbocharger comprises an exhaust gas guide assembly in which a plurality of adjustable blades are rotatably held at the outside of an outer periphery of an exhaust turbine wheel, the exhaust gas guide assembly being incorporated in the VGS turbocharger, and wherein exhaust gas discharged from an engine at a relatively low flow rate is suitably throttled by the adjustable blades to increase the velocity of the exhaust gas so that the exhaust turbine wheel is rotated by energy of the exhaust gas and a compressor directly coupled to the exhaust turbine wheel feeds more air into the engine than is fed into it by natural suction, whereby a high output power of the engine is obtained at low rotational speeds, characterized in that: in manufacturing a component member of the exhaust gas guide assembly, the component member is a member which is formed to have an aimed at shape by subjecting a shaped material used as a workpiece to one or more of blanking, drawing, coining, boss forming, bending, forging, heading, caulking, ironing and rolling in which a punch and a die are mainly used; and the punch and the die are used after selection of a material, hardness and toughness thereof through an optimization analysis in accordance with a desired shape of the workpiece and a processing technique to be applied to the workpiece.

Accordingly, the optimal conditions of the punch and die are selected by analyzing the material, hardness and toughness thereof in accordance with the forming method of the metal raw material (workpiece) and the aimed at shape, allowing finishing of the component member of the exhaust gas guide assembly to a high accuracy - tolerance dimension of approximately ±0.01 mm when the component member is separate from the exhaust gas guide assembly. This can also extend the life of die members such as punch and die.

In addition to the above, the punch may include a taper surface formed on a cutting edge thereof so as to disperse stress acting on the cutting edge during shearing of the workpiece.

Accordingly, a taper surface is formed on the cutting edge of the punch to disperse stress, thus further improving the durability life of die members such as punch and die.

In addition to the above, when the workpiece is formed into the member of a desired shape, in the case where the method includes the steps of blanking out a blank having a certain shape and forming holes.in the blanked blank, the blanking and forming of the holes may be carried out in a single pressing stroke of the punch.

Accordingly, blanking out of a blank and forming of holes on the blanked blank can be carried out at once by a single pressing operation of the punch, thus contributing to improved productivity of the component member.

By further way of explanation, there is described a method of manufacturing a component member for a VGS turbocharger, wherein the turbocharger comprises an exhaust gas guide assembly in which a plurality of adjustable blades are rotatably held at the outside of an outer periphery of an exhaust turbine wheel, the exhaust gas guide assembly being incorporated in the VGS turbocharger, and wherein exhaust gas discharge from an engine at a relatively low flow rate is suitably throttled by the adjustable blades to increase the velocity of the exhaust gas so that the exhaust turbine wheel is rotated by energy of the exhaust gas and a compressor directly coupled to the exhaust turbine wheel feeds more air into the engine than is fed into it by natural suction, whereby a high output power of the engine is obtained at low rotational speeds, characterized in that: in manufacturing a component member of the exhaust gas guide assembly, the component member is a pin-shaped member which is formed by applying a pressure axially to an end portion or an intermediate portion of a pin-shaped metal raw material that is a workpiece by a header device equipped mainly with a punch and a die, whereby part of the workpiece is processed to have an appropriate shape; and the die for processing the workpiece has a taper surface on a guide portion thereof which guides deformation of the workpiece.

Accordingly, although tremendous load is anticipated to be applied to the punch, die and so on during heading due to the fact that the work to be formed is made of a difficult-to-cut heat-resistant metal, the guide portion of the die is formed in taper shape, thus allowing effective distribution of stress associated with forming and prolonging the die life.

In addition to the above, a processing speed of the header device may be set at a low speed of about several meters per second; and when the punch reaches a bottom dead point, the punch may stop operating once to ensure conformity of the workpiece with the taper surface of the die.

Accordingly, the processing speed of the header device is controlled at low speeds, possibly improving finishing accuracy of a pin-shaped member. The punch is maintained at the lower dead position for an appropriate period of time, ensuring proper conformance between the work and the die's taper surface and possibly accelerating the deformation of the work. Further, adoption of such a forming method ensures added wear suppression on the die such as punch and die and possibly further prolonging the die life.

In addition to the above, the component member may be the aimed at pin-shaped member which is obtained in such a manner that a piece of a substantially constant length is cut of from an elongated metal raw material on which an oxalate coating of approximately 5 to 10 µm has been formed in advance, to be used as the workpiece and then the workpiece may be subjected to heading.

Accordingly, a relatively thick oxalate coating of 5 to 10 µm is formed on an elongated metal raw material before heading, reducing friction between the workpiece and the die during heading and further improving workability. This also makes more feasible heading from a difficult-to-machine material such as stainless heat-resistant steel, that is, mass production of a pin-shaped material.

According to the invention, there is provided a method of manufacturing a component member for a VGS turbocharger of the type which comprises an exhaust gas guide assembly in which a plurality of adjustable blades are rotatably held at the outside of an outer periphery of an exhaust turbine wheel, the exhaust gas guide assembly being incorporated in the VGS turbocharger, and in which exhaust gas discharged from an engine at a relatively low flow rate is suitably throttled by the adjustable blades to increase the velocity of the exhaust gas so that the exhaust turbine wheel is rotated by energy of the exhaust gas and a compressor directly coupled to the exhaust turbine wheel feeds more air into the engine than is fed into it by natural suction, whereby a high output power of the engine is obtained at low rotational speeds, wherein: in manufacturing a component member of the exhaust gas guide assembly, the component member includes an element to be caulked and an element to be attached which are subjected to press-caulking; and when the elements are joined together, a portion to be deformed of the element to be caulked is inserted into a receiving hole of the element to be attached to penetrate therethrough and then is deformed by a pressing operation of a caulking punch so as to come into close contact with the receiving hole; and wherein either one or both of the portion to be deformed and the receiving hole is provided thereon with an engagement portion which is formed in advance and which is arranged to engage with the other of the portion to be deformed and the receiving hole after caulking to transmit rotation between the elements, wherein the pressing operation of the caulking punch is carried out in such a manner as to press the caulking punch only axially against the portion to be deformed; and the receiving hole has a non-circular shape in cross section which is arranged to engage an inner surface thereof with the portion to be deformed of the element inserted in the receiving hole after caulking so as to provide said rotation transmission between the elements.

According to the invention, engagement portions are formed in advance on portions to be deformed and the receiving holes to improve the capability of transmitting rotation after caulking, ensuring reliable transmission of rotation between elements to be caulked and attached and securing post-caulking rotational torque. Formation of the engagement portions makes it possible to retain caulking strength during usage in a high-temperature atmosphere.

In addition to the above, the portion to be deformed and the receiving hole may be formed to have substantially the same mating shape.

Accordingly, the portions to be deformed and the receiving holes on which the engagement portions are formed are formed into substantially the same mated state, more reliably securing post-caulking rotational torque.

In addition to the above, the pressing stroke and a shape of a pressing end of the caulking punch may be set depending on the form of deformation of the portion to be deformed.

Accordingly, the pressing stroke and tip shape of a caulking punch are set according to the form of deformation of the portions to be deformed, allowing smooth performance of forming (deformation) for bringing the portions to be deformed into sufficient contact with the receiving holes. That is, while the portions to be deformed concurrently undergo pounding, busting and expansion by the pressing operation of the caulking punch, various appropriate shapes can be selected for the pressing tip portion of the caulking punch, for example, depending on which of the deformations should mainly take place or, in the case of expansion alone, which shape the portions to be deformed should be expanded into.

In addition to the above, the element to be caulked may be a shaft portion of the adjustable blade; and the element to be attached may be a transmission member for turning the adjustable blade by an appropriate angle.

Accordingly, the elements to be caulked are adjustable blades while the elements to be attached are transmission members for rotating the adjustable blades, ensuring reliable transmission of rotation from the transmission members to the adjustable blades and thereby allowing more accurate control of adjustable blade rotation.

According to another aspect of the invention, there is provided a component member for a VGS turbocharger which is so constructed that a plurality of adjustable blades are rotatably held at the outside of an outer periphery of an exhaust turbine wheel, the component member being incorporated, in use, in the VGS turbocharger, wherein the VGS turbocharger is of the type in which exhaust gas discharged from an engine at a relatively low flow rate is suitably throttled by the adjustable blades to increase the velocity of the exhaust gas so that the exhaust turbine wheel is rotated by energy of the exhaust gas and a compressor directly coupled to the exhaust turbine wheel feeds more air into the engine than is fed into it by natural suction, whereby a high output power of the engine is obtained at low rotational speeds, whereby the component member includes an element to be caulked and an element to be attached which are subject to press-caulking and is manufactured by the manufacturing method described above, and wherein the receiving hole has a non-circular shape in cross section to form the engagement portion on an inner surface thereof which engages, in use, with the portion of the caulked element inserted in the receiving hole so as to transmit rotation between the caulked element and the attached element.

Accordingly, the component member of the VGS turbocharger can be manufactured with absolutely no time-consuming machining, thus making mass production of the exhaust gas guide assembly and, by extension, the turbocharger more feasible.

An exhaust gas guide assembly for a VGS turbocharger in accordance with the invention comprises: adjustable blades for suitably adjusting the flow rate of exhaust gas discharged from an engine so as to rotate an exhaust turbine wheel; a turbine frame for rotatably supporting the adjustable blades at the outside of an outer periphery of the exhaust turbine wheel; and an adjusting mechanism for suitably rotating the adjustable blades so as to adjust the flow rate of the exhaust gas; wherein the flow of the exhaust gas at a relatively low flow rate is throttled by the adjustable blades to increase the velocity of the exhaust gas so that a high output power is obtained at low rotational speeds; and the exhaust gas guide assembly is characterized in that: a component member as described above is used as a component member of the exhaust gas guide assembly.

Accordingly, mass production of the highly heat-resistant and highly accurate exhaust gas guide assembly becomes more feasible.

A VGS turbocharger in accordance with the invention is so constructed that an exhaust turbine is driven by exhaust energy of an engine to rotate a compressor coupled to the exhaust turbine with the power of the exhaust turbine, whereby the engine is supercharged to have more air fed into it than is fed into it by natural suction, and is characterized in that: the turbocharger has an exhaust gas guide assembly as described above incorporated therein; whereby flow of the exhaust gas at a relatively low flow rate is suitably throttled to increase the velocity of the exhaust gas so that a high output power is obtained when the engine is running at low rotational speeds.

Accordingly, mass production of the highly heat-resistant VGS turbocharger becomes more feasible. The turbocharger allows accurate and reliable adjustment of exhaust gas flow rate and is capable of sufficiently withstanding usage in a high-temperature exhaust gas atmosphere. Preferred embodiments of the invention and related aspects will now be described by way of example only and with reference to the accompanying drawings in which:
Fig. 1(a) is a perspective view of a VGS turbocharger using a component member of the present invention, and Fig. 1(b) is an exploded perspective view of an exhaust gas guide assembly;
Figs. 2(a) and 2(b) are sectional views showing stepwise how a preparatory hole formed in a shaped material of a frame segment is finished into a receiving hole in a finished state;
Figs. 3(a) and 3(b) are sectional views showing stepwise how the preparatory hole formed in a shaped material of the frame segment is finished into the receiving hole in a finished state;
Fig. 4 is an explanatory view showing a punch portion with a steel ball, to be inserted into the preparatory hole, having a relatively convex portion formed on the side portion thereof for thrusting away the metal material on the inner surface of the preparatory hole;
Fig. 5 is a graph showing the relationship between swaging dimension and steel ball press-in speed during finishing of the receiving hole;
Figs. 6(a) and 6(b) are explanatory views showing stepwise how a preliminary hole of the frame segment is fine-blanked into the preparatory hole;
Fig. 7 is an explanatory view showing how a taper surface is formed on the cutting edge of the punch;
Figs. 8(a), 8(b) and 8(c) are sectional views showing stepwise a manner of operation in which steps of blanking out a blank and forming a hole on the blanked blank are carried out by a single pressing operation of the punch;
Fig. 9 is an explanatory view showing stepwise how a pin-shaped component member is formed by a header device;
Fig. 10(a) illustrates perspective views showing how, during joining of the elements to be caulked and attached, the opposite two surfaces of the portion to be deformed of the element to be caulked and the receiving hole of the element to be attached are formed into notches, and Fig. 10(b) illustrates sectional views showing how a hollow-shapes concave portion formed in the portion to be deformed is press-caulked only by the pressing operation of a caulking punch;
Fig. 11(a) illustrates a perspective view showing the elements to be caulked and attached in which the portion to be deformed and the receiving hole are formed in the shape of D, and Fig. 11(b) illustrates a perspective view showing a manner in which the portion to be deformed and the receiving hole are formed in the shape of a star;
Fig. 12 illustrates plan sectional views showing how the portion to be deformed is formed in cylindrical shape and the receiving hole in the shape of a star before and after caulking;
Figs. 13(a), 13(b) and 13(c) illustrate sectional views showing various embodiments of the caulking punch;
Fig.14 illustrates an indexing mechanism incorporated in press-caulking;
Figs. 15(a) and 15(b) show a common spin caulking method before and after caulking, with Fig. 15(a) being a front sectional view, and Fig. 15(b) being a perspective view; and
Fig. 16(a) and 16(b) show the common press caulking method before and after caulking, with Fig. 15(a) being a front sectional view, and Fig. 15(b) being a perspective view.

The present invention will be described below with reference to illustrated embodiments. In the description, a description will be given first of an exhaust gas guide assembly A of a VGS turbocharger using various component members according to the present invention, and such various component members will be mentioned together in the description. Then, a description will be made of methods of mass-producing the respective component members and engineering improvements that facilitate the mass production processing.

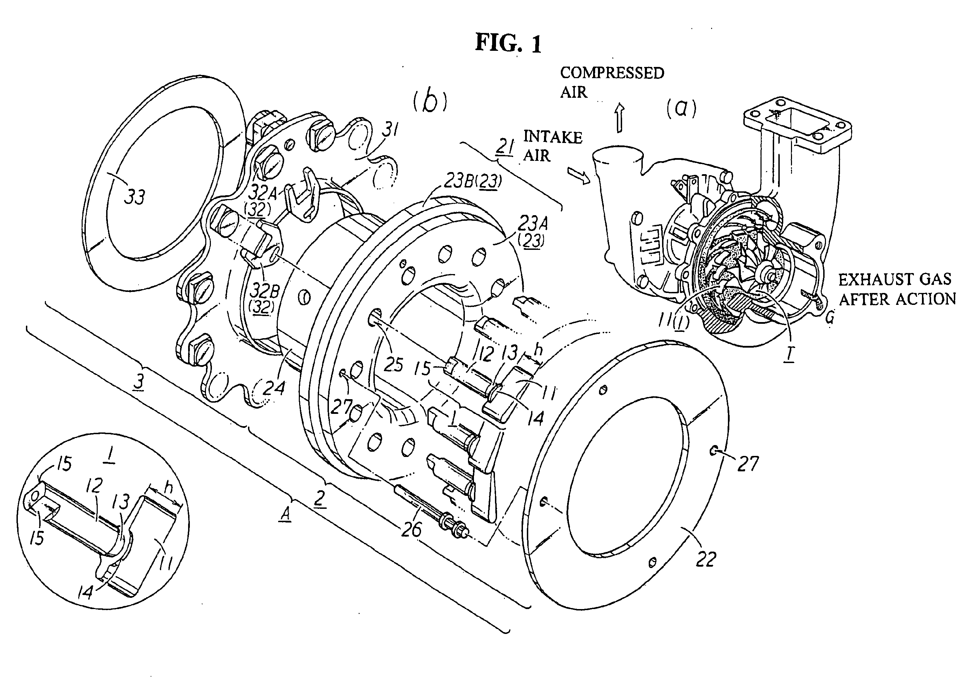

The exhaust gas guide assembly A adjusts exhaust flow rate by throttling exhaust gas G particularly when the engine is running at low rotational speeds and comprises, as shown for example in Fig. 1, a plurality of adjustable blades 1 that are arranged on the outside of an outer periphery of an exhaust turbine T and substantially set the exhaust flow rate, a turbine frame 2 that rotatably holds the adjustable blades 1 and an adjusting mechanism 3 that rotates the adjustable blades 1 by a given angle to set the flow rate of the exhaust gas G as appropriate. The component members of the exhaust gas guide assembly A will be descried next.

A description will be given of the adjustable blades 1 first. The plurality of adjustable blades 1 (generally about 10 to 15 pieces for each exhaust gas guide assembly A) are disposed along the outer periphery of the exhaust turbine T in the shape of a circular arc for example as shown in Fig. 1, and each thereof rotates substantially by the same amount to, adjust the exhaust flow rate as appropriate. Each of the adjustable blades 1 comprises a blade portion 11 and a shaft portion 12.

The blade portion 11 is formed so as to have a given width mainly according to the width of the exhaust turbine T. The cross section thereof along the width is generally formed in the shape of an aerofoil such that the exhaust gas G is effectively directed toward the exhaust turbine T. It is to be understood that the width of the blade portion 11 is assumed to be a blade height h for reasons of convenience.

The shaft portion 12 is formed so as to be continuous and integral with the blade portion 11 and corresponds to a rotary shaft when the blade portion 11 is moved.

The connection portion between the blade portion 11 and the shaft portion 12 is formed such that a taper portion 13 narrowing from the shaft portion 12 toward the blade portion 11 and a flange portion 14 larger to some degree in diameter than the shaft portion 12 lie in a line. It is to be noted that the bottom surface of the flange portion 14 is formed substantially on the same plane as the end surface of the blade portion 11 on the side of the shaft portion 12, and the plane serves as a sliding surface as the adjustable blades 1 are mounted to the turbine frame 2, thus ensuring smooth rotation of the adjustable blades 1. Further, reference surfaces 15 serving as a reference for mounting condition of the adjustable blades 1 are formed at the tip portion of the shaft portion 12. The reference surfaces 15 are portions fastened to the adjusting mechanism 3 described later by caulking and consist of opposed planes cut out on the shaft portion 12 that are formed in a substantially constant sloped state with respect to the blade portion 11, for example as shown in Fig. 1.

The turbine frame 2 will be described next. The turbine frame 2 is constituted as a frame member for rotatably holding the plurality of adjustable blades 1 and is configured so as to sandwich the adjustable blades 1 with a frame segment 21 and a holding member 22, for example as shown in Fig. 1. The frame segment 21 comprises a flange portion 23 for accepting the shaft portions 12 of the adjustable blades 1 and a boss portion 24 onto whose outer periphery the adjusting mechanism 3 described later is slipped. Due to such a structure, as many receiving holes 25 as the number of adjustable blades 1 are formed equidistantly on the circumferential edge portion of the flange portion 23.

The holding member 22 is formed in the shape of a disk in which an opening is provided at the center portion as shown in Fig. 1. The dimension between the frame segment 21 and the holding member 22 (approximately the blade width of the adjustable blade 1) sandwiching the blade portions 11 of the adjustable blades 1 is maintained substantially constant to ensure smooth rotation at all times, and the dimension between the two members is maintained for example by four caulking pins 26 provided on the outer periphery portion of the receiving holes 25. Holes formed in the frame segment 21 and the holding member 22 for accepting the caulking pins 26 are referred to as pin insertion holes 27.

While, in this embodiment, the flange portion 23 of the frame segment 21 consists of two flange portions or a flange portion 23A substantially equal in diameter to the holding member 22 and a flange portion 23B larger to some degree in diameter than the holding member 22 and the two portions are formed by the same member, it may be possible to separately form the two flange portions different in diameter and link the two later by caulking or brazing if forming by the same member involves complexity.

The adjusting mechanism 3 will be described next. The adjusting mechanism 3, provided on the outer periphery side of the boss portion 24 of the turbine frame 2, is designed to rotate the adjustable blades 1 for adjusting the exhaust flow rate and comprises a rotation member 31 for substantially generating rotation of the adjustable blades within the assembly and transmission members 32 for transmitting the rotation to the adjustable blades 1, for example as shown in Fig. 1. The rotation member 31 is formed substantially in the shape of a disk with an opening at the center portion as illustrated and provided with as many equidistantly spaced transmission members 32 as the number of adjustable blades 1 on the circumferential edge portion thereof. It is to be noted that the transmission member 32 consists of a driving element 32A rotatably mounted to the rotation member 31 and a driven element 32B mounted to the reference surfaces 15 of the adjustable blade 1 in a fixed state, and rotation is transmitted with the driving element 32A and the driven element 32B connected to each other. More specifically, the driving element 32A in the shape of a rectangular piece is rotatably pinned to the rotation member 31, and the driven element 32B, formed substantially in the shape of U, is fastened to the reference surfaces 15 at the tip of the adjustable blade 1 so as to accept the driving element 32A. The driving element 32A in the shape of a rectangular piece is slipped into the U-shaped driven element 32B, and the rotation member 31 is mounted to the boss portion 24 so as to allow engagement of the two.

To arrange the plurality of adjustable blades 1 along the circumference in proper alignment in the initial mounted state, it is necessary for each of the adjustable blades 1 and the driven elements 32B to be mounted substantially at a constant angle, and the reference surfaces 15 of the adjustable blade 1 are mainly responsible for serving this function in this embodiment. There is a concern that the transmission members 32 may become disengaged, in the case of slight estrangement of the rotation member 31 from the turbine frame 2, if the rotation member 31 is simply left slipped onto the boss portion 24. To avoid this, therefore, a ring 33 is provided from the side opposite to the turbine frame 2 so as to sandwich the rotation member 31 in order to impart the rotation member 31 a pressing tendency toward the side of the turbine frame 2.

When the engine is running at low rotational speeds, such a configuration ensures rotation of the rotation member 31 of the adjusting mechanism 3 as appropriate, transmission of rotation to the shaft portions 12 via the transmission members 32, rotation of the adjustable blade 1 as shown in Fig. 1 and throttling of the exhaust gas G as appropriate, thus adjusting the exhaust flow rate.

An example of the exhaust gas guide assembly A using the component members described herein has the basic structure as described above, and various engineering improvements will be described below to allow mass production of such component members. The exhaust gas guide assembly A is made of a difficult-to-process metal raw material having excellent heat and oxidation resistance due to usage in a high-temperature exhaust gas atmosphere. Such a raw material is commonly difficult to process, making difficult mass production by normal press forming using a punch and die as main components. For this reason, the present invention provides various engineering improvements to allow mass production.

In the description of such engineering improvements, those improvements will be described as embodiments 1 and 2 for providing the receiving holes 25 for rotatably holding the adjustable blades 1 with a high accuracy. Another engineering improvement will be described as embodiment 3 for selecting the material, hardness and toughness of the punch and die mainly in accordance with the formed shape and forming method of the component member during formation of the component member by relatively simple pressing and forming. Still another engineering improvement will be described as embodiment 4 for improving ease of forming and prolonging the die life, during heading of a pin-shaped member, by tapering the guide portion for guiding the deformation of a workpiece (component member). Yet still another engineering improvement will be described as embodiment 5, for example, for providing an improved high temperature strength - a drawback to press-caulking method - while using the press-caulking method that readily allows concurrent caulking of a plurality of pairs of component members during joining of the component members.

### (1) Embodiment 1

This is an engineering improvement for finishing the receiving holes 25 for rotatably holding the adjustable blades 1 and more particularly, an engineering improvement for ensuring a high accuracy in hole dimension and inner surface roughness. Since the receiving holes 25 are formed in the frame segment 21 of the turbine frame 2, the expression "component member" here refers substantially to the frame segment 21. In the description given below, therefore, a description will be given of the manufacturing method of the frame segment 21 and the engineering improvement together.

As for the frame segment 21, incidentally, a metal raw material (hereinafter referred to as shaped material W), integrally comprising the flange portion 23 and the boss portion 24 prior to the finished state thereof, is formed first. The frame segment 21 is obtained as a finished product after partial modifications made to the shape of the shaped material W as necessary or formation of the receiving holes 25. Here, the portions prior to the finished state of the flange portion 23 and the boss portion 24 before the portions are formed in the shaped material W are defined as a flange formation portion 23a and a boss formation portion 24a. Preparatory holes for the receiving holes 25 formed in the shaped material W are defined as preparatory holes 25a (including those formed in advance on the shaped material W).

### (i) Step of Preparing Shaped Material

This step is intended to prepare the metal shaped material W that will integrally comprise the flange formation portion 23a and the boss formation portion 24a and serve as a starting form for the frame segment 21. In preparing such a shaped material W, appropriate methods such as precision casting, metal injection molding and press forming of a blank (formation of the blank into a projection) can be used, and a brief description thereof will be given below.

### (a) Precision Casting

The lost wax method, a typical precision casting method, nearly faithfully reproduces the shape and size of the aimed at product (the frame segment 21 in this case) with a wax model, coats the wax model with refractory substance, melts the wax inside to obtain only the refractory substance (coated substance) and performs casting using the refractory substance as a mold. Such precision casting is generally known to be able to reproduce a cast product (shaped material W) close to the actual product or in a so-called near net shape state by forming the mold substantially in the shape of the aimed at product. However, this embodiment uses a virgin material containing heat-resistant steel (alloy) as principal base material during casting and optimizes C (carbon), Si (silicon) and O (oxygen) contents - 0.05 to 0.5%, 0.5 to 1.5% and 0.01 to 0.1% respectively for C, Si and O - in weight percent, possibly providing improved fluidity to molten metal and further improved dimensional accuracy to cast product and ensuring further enhanced near net ratio. It is also possible to shorten the time until the mold is broken, for example, by rapid cooling the metal raw material cast together with the mold after pouring, thus making a size of solidified grains of the shaped material W fine and enhancing strength and toughness. Adoption of such various engineering improvements in the casting stage ensures higher accuracy in the realization of the preparatory holes 25a of desired accuracy in the shaped material W. It is to be understood that holes other than the receiving holes 25 such as pin insertion holes 27 are formed slightly smaller than in a finished state.

### (b) Metal Injection Molding

This method imparts plasticity by kneading together metal powder - an ingredient - and a binder (additive such as a mixture of polyethylene resin, wax and phthalic acid ester and used mainly to link metal powders) first and then forms the desired shape by injecting the mixture into the mold, removes the binder and finally conducts sintering, thus providing a molded product (shaped material W) having a near net shape substantially similarly to precision casting. In this case, to generate small and uniform closed cells (spherical gaps between metal particles), it is possible to improve bulk density by conducting sintering over a period of 30 minutes to two hours or performing HIP (abbreviation of Hot Isostatic Pressing). It is also possible to make the metal powder particles spherical and fine to the extent possible by air atomization or water atomization, thus providing improved fatigue property under high-temperature rotatory bending to the shaped material W. Adoption of such various engineering improvements also in the metal injection molding stage ensures higher accuracy in the realization of the preparatory holes 25a of desired accuracy in the shaped material W. It is to be understood that holes other than the receiving holes 25 such as pin insertion holes 27 are also formed slightly smaller than in a finished state in this stage.

### (c) Press Forming of Blank

This method uses, as a starting material (shaped material W), a blank blanked from a steel strip of substantially constant thickness (e.g., about 5 mm) so as to have a volume (volume of the metal raw material) that allows realization of the aimed at frame segment 21. The center portion (boss formation portion 24a) of the blank is formed into a projecting state by deep drawing or burring, thus providing the shaped material W of the same level as that obtained by precision casting and metal injection molding. When the blank is press-formed into the shaped material W, it is difficult to form the preparatory holes 25a concurrently during blanking of the blank and formation thereof into a projection. Therefore, it is common to form the preparatory holes 25a prior to finishing, for example, by fine blanking (FB). Naturally, this also holds true for holes other than the receiving holes 25 such as the pin insertion holes 27.

### (ii) Modification of Shape and Size

Following formation of the shaped material W that will serve as a starting form for the frame segment 21 by an appropriate method, the shape and size of portions of the shaped material W such as the boss portion 24 (boss formation portion 24a) and two flange portions different in diameter - the flange portions 23A and 23B - are modified as necessary so as to present a desired state (finished state). It is to be noted that, particularly if the blank is press-formed into the shaped material W as described above, forming of the preparatory holes 25a for the receiving holes 25 and forming of the pin insertion holes 27 to have a desired dimension are often conducted in this stage.

### (iii) Finishing of Receiving Holes (as to Steel Ball)

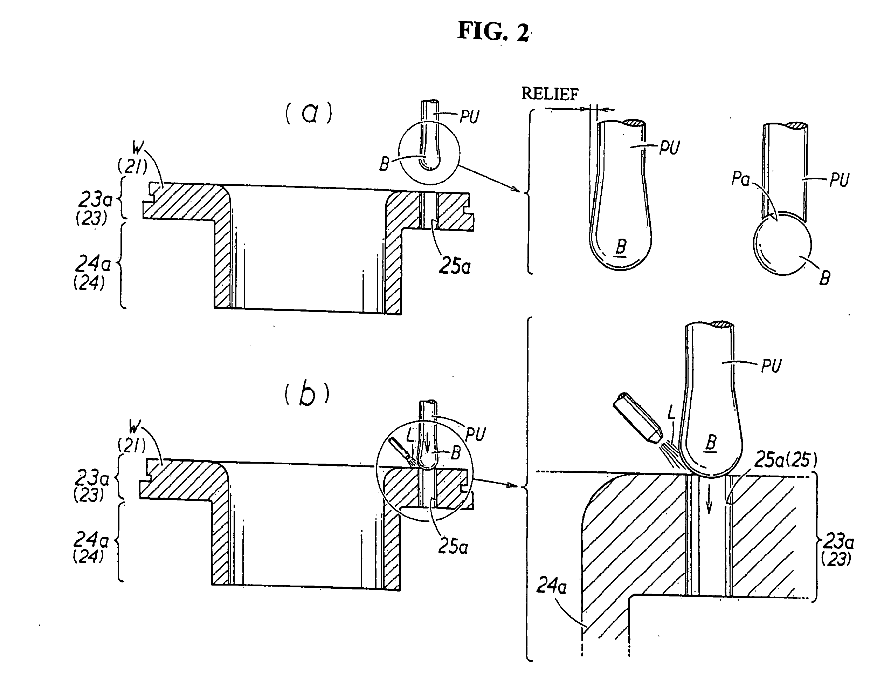

Prior to or following the step of modifying the shaped material W, the preparatory holes 25a are finished into the receiving holes 25 by pressing a steel ball B into the preparatory holes 25a, thus ensuring a desired accuracy in hole diameter and inner surface roughness. Finishing itself can be substantially performed by pressing the steel ball B having substantially the same diameter as the receiving hole 25 in finished state using a punch. However, formation of the steel ball B and the punch as separate pieces may result in much expense in time, for example, because the steel ball B is small and therefore easy to lose and because much time is need for detachment and reattachment of the steel ball during replacement. For this reason, the steel ball B and the punch are formed integrally as shown in Fig. 2(a) in this embodiment for improved ease of handling the steel ball B. Here, symbol "PU" is assigned to the punch portion if a distinction is needed between the punch portion and the steel ball B.

Thus, the steel ball B for finishing the receiving holes 25 is formed integrally at the tip of the punch portion PU in this embodiment. Therefore, the steel ball B that will serve as the substantial acting portion is formed larger to some degree (in larger diameter) than the punch portion PU as shown concurrently in Figs. 2. For instance, the difference in diameter, that is, relief dimension is about 0.02 to 0.05 mm. The connection portion between the steel ball B and the punch portion PU is formed in a taper shape.

As for the material of the steel ball B including the punch portion PU, incidentally, ferrotitanite (alloy of steel and titanium) having a hardness HRC (Hardness Rockwell C) of 70 or more is, for example, used because wear resistance and high toughness are demanded.

As described above, it is originally possible to form the steel ball B and the punch portion PU as separate pieces. In this case, it is preferred that the tip of the punch portion PU be formed in a concave shape for the punch portion PU to stably hold the steel ball B (this portion is referred to as a concave portion Pa). Incidentally, when this construction is adopted, it is possible to reliably suck the steel ball B into the concave portion Pa of the punch portion PU by magnetic force, thus allowing further stable holding of the steel ball B (refer to the enlarged view of Fig. 2(a)).

### (iv) Finishing of Receiving Holes (Substantial Manner of Operation)

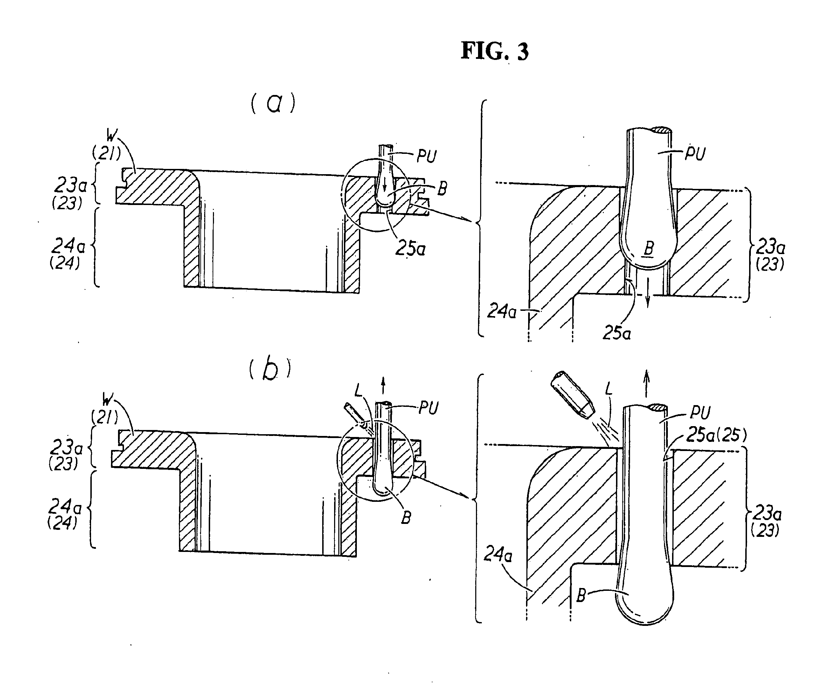

To finish the receiving holes 25, the steel ball B formed integrally with the punch portion PU is pressed into the preparatory holes 25a. It is to be noted that the steel ball B that is caused to penetrate through the preparatory hole 25a once is pulled back into the preparatory hole 25a again (receiving hole 25) as shown in Figs. 2 and 3 in this embodiment, thus finishing the receiving hole 25 by at least one reciprocating motion of the steel ball B (see Fig. 3(b)).

While Figs. 2 and 3 show that the receiving holes 25 are finished one at a time, it is not always necessary to do so and is possible, instead, to finish two or more holes or all holes concurrently.

It is to be noted that finishing of the receiving holes 25 by the steel ball B is achieved by the steel ball B pressed thereinto thrusting away the excess metal material (excess metal) on the inner surface of the preparatory holes 25a in the direction nearly orthogonal to the holes (horizontal direction in this case) or expanding the preparatory holes 25a rather than scraping the excess metal on the inner circumferential surface of the preparatory holes 25a as in the case of a so-called precision reamer (see Fig. 3(a)). Naturally, the excess metal that has been pushed away has, to some degree, a so-called spring-back tendency of returning in the direction of narrowing the hole diameter after passage of the steel ball B. Taking into consideration the spring back, for this reason, the diameter of the steel ball B is determined, as appropriate, in relation to the finished diameter (receiving hole 25) and finishes the receiving holes 25 by one or more reciprocating motions of the steel ball B.

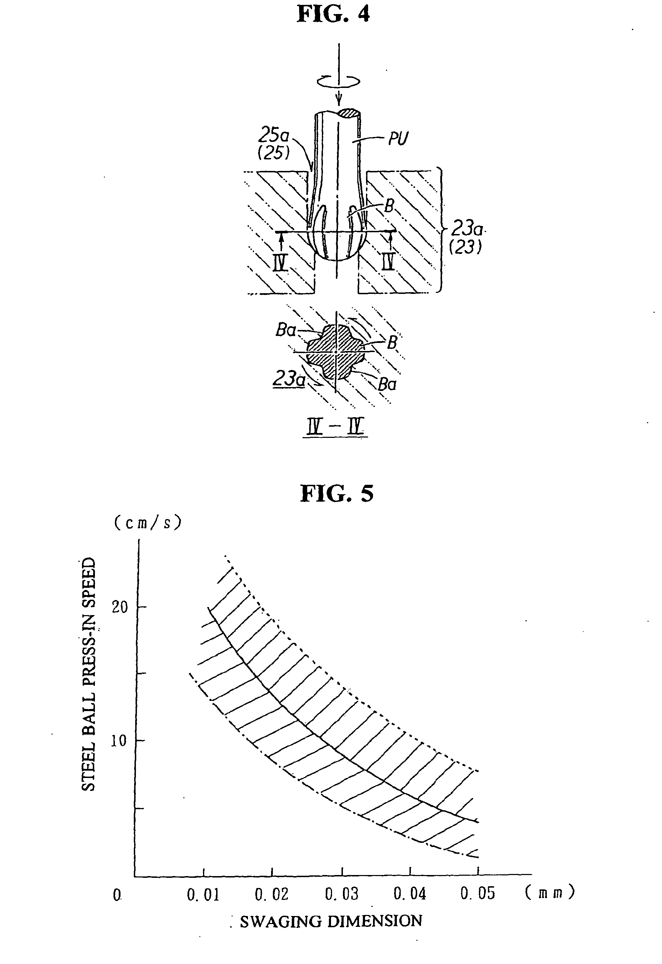

Further, this embodiment determines the dimension of the excess metal to be pushed away from the inner surface of the preparatory hole 25a by the steel ball B during pressing of the steel ball B as swaging dimension and limits the swaging dimension, for example, to about 0.03 to 0.05 mm or less. Fig. 5 shows the relationship between the swaging dimension and the steel ball press-in speed (processing speed). In this embodiment, the press-in speed of the steel ball B can be adjusted as appropriate according to the swaging dimension. It is to be noted that the curve sandwiched between the hatched areas in the graph represents the reference in the relationship between the swaging dimension and the press-in speed, with the upper and lower hatched areas indicating the permissible range thereof. By setting the swaging dimension and the press-in speed within this range, it is possible to obtain proper forming conditions.

Further, lubricant (working oil) L is applied at proper timings during finishing in this embodiment. In this case, the lubricant L is applied immediately before the steel ball B is pressed into the preparatory hole 25a (see Fig. 2(b)) and when the steel ball B that has once penetrated through the preparatory hole 25a is pulled back into the hole again (see Fig. 3(b)). The amount of the lubricant L can naturally be changed as appropriate according to the press-in speed (processing speed) of the steel ball B.

Thus, this embodiment ensures a high accuracy in hole diameter and inner surface roughness by pressing-in the steel ball B for finishing the receiving holes 25. Finishing of the receiving holes 25 requires absolutely no time-consuming machining, making mass production of the turbine frame 2 and, by extension, the exhaust gas guide assembly more feasible. The steel ball B is formed integrally at the acting tip portion of the punch portion PU, making it possible to perfectly hold the steel ball B. This allows efficient finishing, making the embodiment effective particularly in the case of a long finishing length, that is, the thick flange portion 23 (e.g., about 30 mm).

While, in the examples shown in Figs. 2 and 3, the steel ball B formed in a substantially spherical shape is linearly pressed solely in the direction of the receiving holes 25 (including reciprocating motion) for finishing, the example shown in Fig. 4 may be adopted in which the steel ball B is rotated while being pressed, for example, in the case where the receiving holes 25 are finished by the steel ball B having relatively convex portions Ba formed on the side portions thereof for thrusting away the excess thickness in the centrifugal direction. In this case, finishing can be carried out more effectively as a result of the push-away effect by linear pressing of the steel ball B coupled synergistically with the push-away effect by rotation of the convex portions Ba.

### (2) Embodiment 2

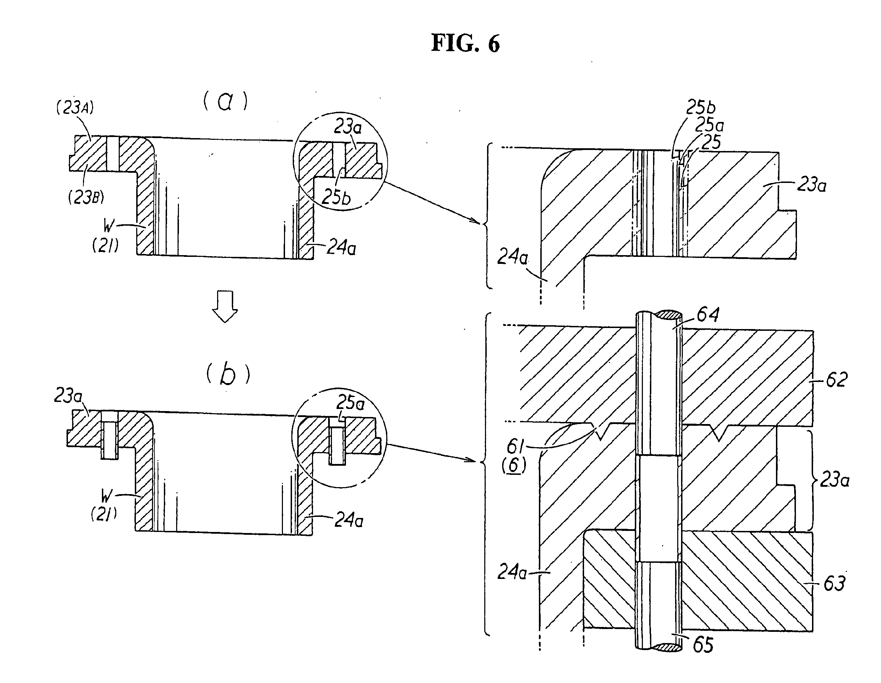

This embodiment is intended to finish the receiving holes 25 with a high accuracy by pressing-in the steel ball B as with the aforementioned embodiment 1. However, in this embodiment 2, preparatory holes (referred to as preliminary holes 25b in the present specification) are formed to be further smaller to some degree in diameter than the preparatory holes 25a at the stage of the shaped material W prior to formation of the preparatory holes 25a and embodiment 2 differs from embodiment 1 (see Fig. 6(a)) in this respect. That is, to finish the receiving holes 25 in embodiment 2, the preliminary holes 25b are formed at the stage of the shaped material W and then formed in succession into the preparatory holes 25a first and then into the receiving holes 25. While methods such as precision casting, metal injection molding and formation of the blank into a projection may be employed to obtain the shaped material W also in this embodiment, the preliminary holes 25b are formed concurrently during formation of the shaped material W when precision casting or metal injection molding is used. If the blank is formed into a projection to obtain the shaped material W, it is common to form the preliminary holes 25b by FB following formation of the boss formation portion 24a into a projection. In the case where precision casting or metal injection molding is used to obtain the shaped material W, it is possible to form the preliminary holes 25b concurrently in the acquisition stage of the shaped material W, thus allowing the hole forming step to be skipped.

It is to be noted that formation of the preliminary holes 25b at the stage of the shaped material W is also an engineering improvement for concurrently forming (reforming, more precisely, because the preliminary holes 25b have been formed) the plurality of receiving holes 25 on the single frame segment 21. Formation of the preliminary holes 25b on the shaped material W prior to formation of the preparatory holes 25a ensures added smoothness and reliability in formation of the preparatory holes 25a even if the flange portion 23 is thick and has a long forming length of 30 mm or so.

A description will be made below of the method of manufacturing the frame segment 21 and the engineering improvements thereof. The steps of obtaining the shaped material W by precision casting and other methods and finishing the receiving holes 25 by pressing the steel ball B into the preparatory holes 25a have already been described, and so their description will be omitted here. A description will be given of the step of forming the preliminary holes 25b formed in the shaped material W into the preparatory holes 25a (step of reforming the preparatory holes).

### (i) Formation of Preparatory Holes (Reformation)

When the preliminary holes 25b formed in the shaped material W are reformed into the preparatory holes 25a larger to some degree in diameter than the preliminary holes 25b, the preliminary holes 25b are subjected, for example, to FB by a precision press device 6. The FB, a method of performing blanking with an extremely small tool clearance or in so-called zero clearance state while allowing high compression force to act on the shear contour portion of the material to be formed (the flange formation portion 23a of the shaped material W in this case), provides an excellent cut surface that is smooth across the plate thickness. The precision press device 6 that performs the FB comprises a plate retainer 62 having annular protrusions 61, a die 63 for holding the shaped material W by sandwiching it together with the plate retainer 62, a punch 64 for substantially blanking the shaped material W and a reverse retainer 65 arranged opposite the punch 64 for example as shown in Fig. 6(b). The precision press device 6 compresses the shaped material W (the flange formation portion 23a) with the plate retainer 62 and the reverse retainer 65 by pressing the shaped material W respectively against the die 63 and the punch 64.

Although concurrent blanking of a plurality of holes by the FB (forming of about 10 to 15 preparatory holes 25a in this case) is originally extremely difficult, such blanking is made possible in this embodiment by forming in advance the preliminary holes 25b that correspond to preparatory holes for the preparatory holes 25a prior to forming the preparatory holes 25a. That is, while the portion of the shaped material W blanked by the precision press device 6 is approximately cylindrical in shape, the thickness thereof (shear allowance blanked by the FB) is limited, for example, to approximately 0.6 mm in this embodiment, thus minimizing the force required by the FB press and thereby allowing forming (reformation) of the plurality of preparatory holes 25a concurrently.

Alternative engineering improvements for concurrently blanking a plurality of holes by the FB include those applied during manufacture of a die of the precision press device 6. More specifically, an improvement may be adopted in which the temperature of the working liquid for cooling the work immediately after machining by discharge with electrodes (die of the precision press device 6) is maintained in the range ±0.5°C to provide improved accuracy in hole diameter and position during electric discharge machining of the die of the precision press device 6.

### (3) Embodiment 3

In this embodiment, the material, hardness and toughness of a punch and die are selected in accordance with the formed shape and forming method of component members of the exhaust gas guide assembly A during formation of the component members by relatively simple pressing and forming using the punch and die. In this embodiment, engineering improvements are also made to die members such as punch and die for improving ease of forming and prolonging the die life and for efficiently carrying out both blanking (blanking out) and opening of holes on the blank in a single pressing stroke.

It is to be noted that the expression "relatively simple pressing and forming" refers to one or a plurality of blanking, drawing, coining, boss forming or stretching, bending, forging, heading, caulking (press caulking, spin caulking), ironing and rolling performed by the punch and die. It is also to be noted that the term "blanking" includes blanking out of and forming holes in the blank and that the blanking method includes the common blanking out method by ordinary press, the FB (precision blanking) and so on. Further, the term "drawing" includes not only forming the blank of a constant thickness into a projection in the shape of a cup or bottomed cylinder but also forming a preparatory hole in the blank (preparatory hole for burring) first and then burring the blank into a projection in the shape of an approximate cylinder or approximate pipe by expanding the preparatory hole.

A description will be given here of several examples in which the material, and the like of die members are selected. First, to form the adjustable blades 1, one of the main component members of the exhaust gas guide assembly A, a heat-resistant metal material with a tensile strength of 700 N/mm² is used which is subjected to coining. To obtain the adjustable blades 1 as finished members, the punch is selected to be made of a (high-toughness) cemented carbide alloy that is further treated by low-temperature physical vapor deposition for improved hardness and toughness. On the other hand, the die is chosen to be made of (high-toughness) HAP72 that is slightly lower in hardness than the punch, but is not treated by low-temperature physical vapor deposition (PVD).

When some type of the frame segment 21 is formed, for example, by hot drawing, tool steel with copper content is used for the mating portion of the die surface (the punch accepting portion) and the punch is TD-treated (formation of titanium carbide and other films in a dispersed manner by salt bath treatment) for improved hardness and prolonged life, thus ensuring excellent thermal conductivity and slidability in the flange portion 23 and thereby allowing forming of a desired product.

Further, when other type of the frame segment 21 is formed, for example, by forging and drawing with ironing, a Mo-based cemented carbide alloy (high in hardness and toughness) can be used for the die of the punch and die so as to withstand concentrated load.

Thus, in this embodiment, the material, hardness and toughness of die members such as punch and die are selected as appropriate in accordance with the desired shape and the forming method of the component members, thus providing highly accurate component members, for example, with a dimensional tolerance on the order of ±0.01 mm. In the case where the die is treated as described above, the durability limit thereof can be extended, for example, to about 5000 to 20000 shots which is five to 40 times improvement over ordinary die members' durability limit of about 500 to 1000 shots.

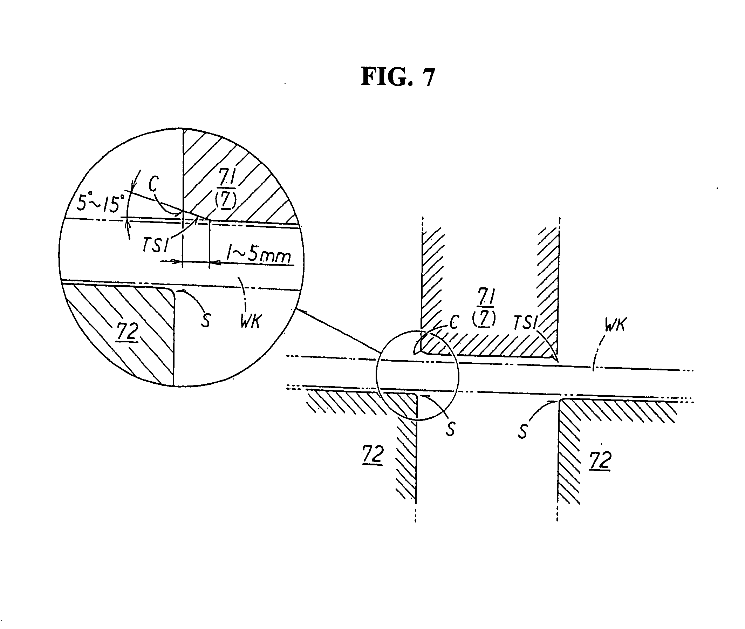

In this embodiment, a taper surface TS1 is formed on a cutting edge C of a punch 71 for example as shown in Fig. 7. The cutting edge C, that is the outermost periphery portion of the punch 71, constitutes an acting portion that, generally when a metal plate material (workpiece WK) is sheared, digs into the workpiece WK first to make a cut or cause a crack in the workpiece WK prior to substantial shearing. This results in large stress (load) being applied to the cutting edge C during shearing. In this embodiment, therefore, the taper surface TS1 is formed, properly distributing stress applied to the cutting edge C in the axial direction of the punch 71 and in the direction orthogonal thereto for further prolonged life of the die members.

It is to be noted that the illustrated taper surface TS1 is formed in the area 1 to 5 mm from the outermost edge of the punch 71 and has an angle of about 5 to 15° from the bottom surface of the punch 71. These dimensions can be changed in various manners, for example, in accordance with how the stress acting on the cutting edge C or the stress applied to the cutting edge C is to be distributed. If such a configuration is adopted, it is naturally preferred that a rounded corner be formed (fillet processed) on a shoulder portion S of a die 72 for prolonged die life.

Of the component members of the exhaust gas guide assembly A, some such as the holding member 22 are manufactured by steps including those of blanking a blank BL from the workpiece WK having a substantially constant thickness and forming holes in the blank BL (the pin insertion holes 27 in the case of the holding member 22). In such a case, it is possible to carry out the steps of blanking the blank BL and forming holes in the blank BL by a single stroke operation of the punch 71.

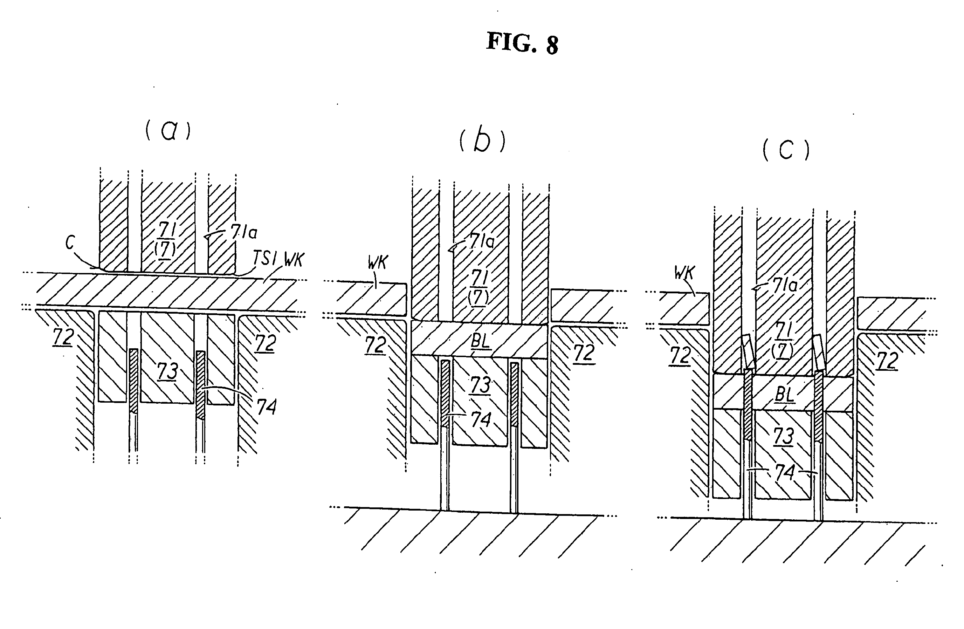

A blanking die 7 used in such a case comprises the punch 71 and the die 72 for mainly serving as a part in the blanking of the blank BL, a counterpressure punch 73 for pressing the blanked blank BL from the side opposite to the punch 71 and a pierce punch 74 for mainly forming holes in the blank BL, for example as shown in Figs. 8. It is to be noted that the punch 71 has a pierce receiving hole 71a formed for accepting the pierce punch 74 and blanked metal raw material (slug) blanked by the pierce punch 74. Although the counterpressure punch 73 is configured so as to follow the pressing operation of the punch 71 while holding the blank BK, the pierce punch 74 provided therein remains fixed regardless of whether the counterpressure punch 73 moves. The distance between the surface where the workpiece WK is held by the die 72 and the acting tip of the pierce punch 74, that is, the gap between the counterpressure punch 73 and the pierce punch 74 is set to be equal to or greater than the thickness of the workpiece WK.

Although the pierce punch 74 remains fixed regardless of whether the counterpressure punch 73 moves in this embodiment, it is possible to operate the pierce punch 74 so as to actively open holes on the blanked and pierced blank BL.

A description will be given below of the embodiment in which the steps of blanking the blank BL and opening holes on the blank BL are carried out in a single stroke of the punch 71 (single pressing operation).

### (i) Blanking of Blank

The workpiece WK of a substantially constant thickness sandwiched between the punch 71 and the die 72 is sheared by the pressing operation of the punch 71, blanking the workpiece WK into the blank BL of appropriate shape. At this time, since the pierce punch 74 is recessed (sunk) below the surface where the die 72 holds the workpiece WK by more than the thickness of the blank BL, the pierce punch 74 does not act on the blank BL when the blanking of the blank BL is complete, with the hole left unopened (refer to Fig. 3(b)).

### (ii) Forming of Hole

After completion of blanking out of the blank BL, the blank BL is further pressed by the punch 71 into the die 72. At this time, since the pierce punch 74 remains fixed regardless of whether the counterpressure punch 73 operates, the pierce punch 74 relatively presses the blank BL, forming holes such as the pin insertion holes 27 in the blank BL. Therefore, the punch 72 mainly serves the function of the counterpressure punch during opening of the holes. It is to be noted that the tip portion of the pierce punch 74 and the slug blanked thereby find their way into the pierce receiving hole 71a of the punch 71. The blank BK with the holes thus formed is pushed out of the die 72, for example, due to the action of the counterpressure punch 73 as the punch 71 is raised, thus completing a single stroke of the punch 71.

Thus, although this embodiment carries out blanking of the blank BL and forming of the holes by a single stroke of the punch 71, it is possible to perform blanking and boss forming of the ring 33 in a single stroke (varies depending on the model). It is also possible to perform, for example, blanking and drawing (burring) of the rotation member 31 at a stroke. Thus, concurrent performance of a plurality of steps in a single stroke ensures efficiency in manufacture of the component members of the exhaust gas guide assembly A.

### (4) Embodiment 4

This embodiment is an engineering improvement for improving ease of forming and prolonging the die life, during heading of a pin-shaped component member, by tapering the guide portion for guiding the deformation of the work (component member). The expression "pin-shaped (component) members" cited in this specification denotes component members derived from short edge (head) or middle portions of a metal material compressed axially by heading and formed into an appropriate shape, among those members making up the exhaust gas guide assembly A, to which the symbol "PI" is assigned. Incidentally, the caulking pins 26 and pins for rotatably linking the driving element 32A and the rotation member 31 are, for example, among the pin-shaped members PI of the exhaust gas guide assembly A. This embodiment is designed to provide the workpiece WK cut to a substantially constant size from an elongated metal raw material (wire rod) and perform heading on the workpiece WK for mass production of the pin-shaped member PI. A description will be given first of an example of a header device 8 that performs heading.

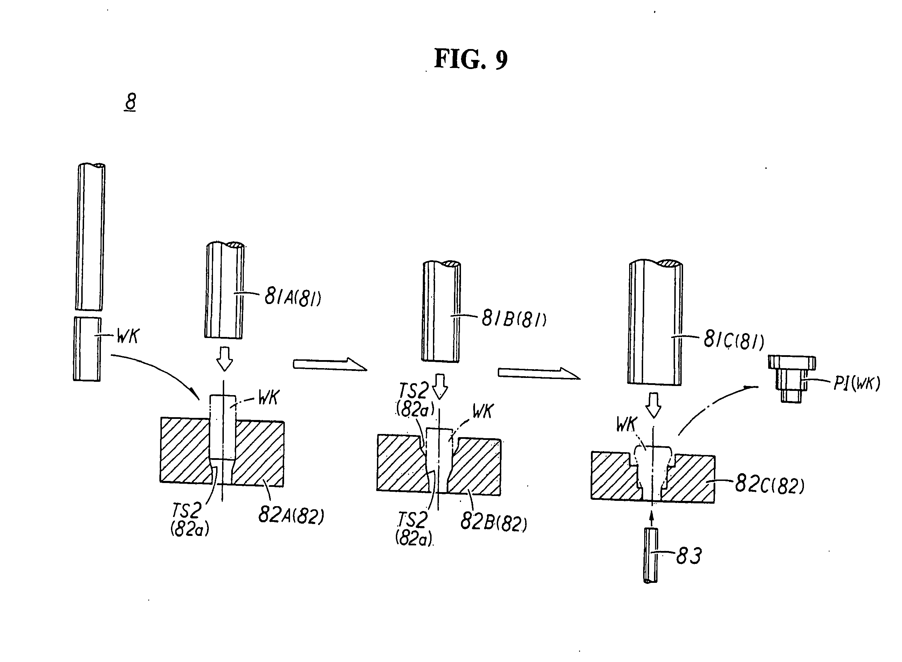

The header device 8 comprises a punch 81 and a die 82 for axially compressing the workpiece WK having a substantially constant length to form the head portion of the pin-shaped member PI into an appropriate shape, for example as shown in Fig. 9.

The die 82 forms a guide portion 82a for guiding the deformation of the workpiece WK into a taper shape (referred to as taper surface TS2) and is designed to effectively distribute the stress acting on the guide portion 82a by the taper surface TS2. Considerable load must be applied to the workpiece WK during forming due to difficulties involved in forming the workpiece WK, inevitably resulting in tremendous stress load acting on the die members such as the die 82. The header device 8 is thus configured to provide improved durability to the die and ensure high accuracy in forming.

A description is given here of an example of embodiment of forming conducted by the aforementioned header device 8.

### (i) Cutting to Constant Length

Prior to substantial heading, the workpiece WK is cut from an elongated metal raw material (wire rod) to a constant length, as shown in Fig. 9. This step of cutting to a substantially constant length can naturally be omitted if it is possible to supply in succession the short workpieces WK, cut to a substantially constant length in advance, to the header device 8 for forming.

### (ii) Pressing (Substantial Heading)

Then, the short workpiece WK undergoes the pressing step (substantial heading by the punch 81 and the die 82) once or a plurality of times in accordance with the desired finished shape. Incidentally, Fig. 9 shows that the pin-shaped member PI is obtained as a finished product after three stages of pressing steps. For this reason, the die members in each stage, that is, the punch 81 and the die 82 are different in each of the pressing steps. In the case where a distinction is necessary between the die members in each step, the die members in the first pressing step are respectively assigned reference symbols "81A" and "82A", those in the second pressing step are respectively assigned reference symbols "81B" and "82B" and those in the third pressing step are respectively assigned reference symbols "81C" and "82C."

It is to be noted that the taper surface TS2 is formed on the dies 82A and 82B of the first and second pressing steps but not on the die 82C of the third pressing step in the illustrated embodiment. The reason is that the final pin-shaped member PI is shaped such that three cylinders of different diameters are arranged axially in a row as illustrated. That is, while the taper surface TS2 is formed on the guide surface 82a for guiding the deformation of the workpiece WK in this embodiment, the taper surface TS2 is not necessarily formed on the die 82 of all steps. Instead, the taper surface TS2 is formed in some of the stages according to the final shape of the pin-shaped member PI.

While Fig. 9 shows that the post-forming workpiece WK in the third pressing step (the pin-shaped member PI as a finished product) is pushed out of the bottom portion of the die 82 by a knockout member 83, it is possible to use such the knockout member 83 in the first and second pressing steps as appropriate.

It is preferred that the header processing speed be low or several meters per second to ensure improved finishing accuracy of the pin-shaped member PI. It is also preferred that the operation of the punch 81 be stopped once (actually for a short period of time) so as to ensure proper conformance between the workpiece WK and the taper surface TS2 of the die 82 when the punch 81 reaches the bottom dead point, that is, when the workpiece WK is set in the guide portion 82a of the die 82 in Fig. 9. This is intended not only to ensure conformance between the workpiece WK that is extremely difficult to form and the guide portion 82a of the die 82 for improved ease of heading but also reduce load imposed on the die and wear thereon for further prolonged die life.

Further, it is preferred that a relatively thick oxalate coating of 5 to 10 µm (normally 2 to 5 µm in film thickness) be formed on an elongated member (wire rod before cutting) before heading. This reduces friction between the workpiece WK and the die members (the punch 81 and the die 82) during heading, thus providing further improved ease of heading. Adoption of such engineering improvements ensures further improved feasibility of use of heading for difficult-to-process materials such as heat-resistant stainless steel.

It is to be noted that, as compared with the die durability limit of 10000 shots or so in the case of heading of such a heat-resistant material with an ordinary header device, the heading according to this embodiment can improve the die durability limit to about 30000 shots.

In conventional heading, incidentally, there are some header devices in which the die shoulder portion (corresponding to the guide portion 82a in this embodiment) is tapered in connection to the conical shape of the head portion (bearing surface shape) of nails, flat head screws, flat head bolts, etc. However, such devices differ considerably from this embodiment in terms of materials of the workpiece WK to be formed, the purpose of the taper surface and so on. That is, while the workpiece WK to be formed in this embodiment is made of a heat-resistant metal material with high Ni and Cr contents, nails and others are made of carbon steel. Heat-resistant metal materials not only have far higher static strength and degree of hardening during forming but also are tougher, making them extremely difficult to process.

Although the open angle of the taper surface TS2 is, for example, about 2 to 70° in this embodiment in connection to the above, the angle may exceed 70° depending on the properties of the raw material. Further, the taper surface TS2 of this embodiment is for the purpose of distributing extremely large stress acting on the die. High-toughness and high-strength SKD (alloy tool steel), high-speed steel and cemented carbide alloy are among materials used for the die. Depending on the hardness and other properties of the workpiece WK to be formed, it is possible to further apply a surface hardening treatment such as PVD (physical vapor deposition) to the die surface.

### (5) Embodiment 5

This embodiment is an engineering improvement for providing improved caulking strength at high temperatures while using the press-caulking method that readily allows concurrent caulking of a plurality of pairs of component members during joining thereof by caulking. The press caulking method commonly has the drawback of low high-temperature strength. A description thereof will be given first in comparison with the spin caulking method.

### (1) Spin Caulking Method

The spin caulking method is a joining method that generally shows excellent caulking strength under high-temperature conditions and is preferred for a VGS turbocharger used in a high-temperature atmosphere. Incidentally, the adjustable blade 1 and the driven element 32B for rotation thereof are among component members that need to be joined.

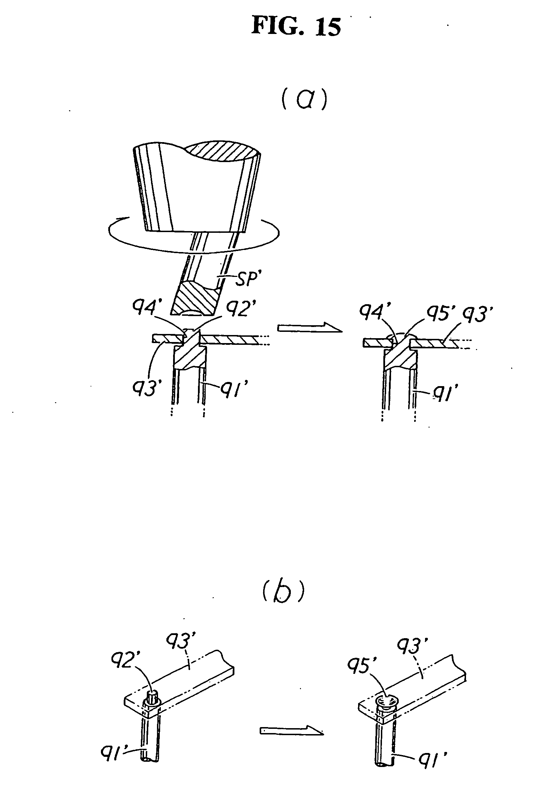

More specifically, the spin caulking method rounds and crushes a portion to be deformed 92' projecting from a caulking receiving hole 94' into the shape of a gently-sloping crest (shield) by causing a caulking punch SP' to circle for example as shown in Figs. 15 (the portion to be deformed 92' after forming is referred to as a deformed portion 95').

Although the acting tip portion of the caulking punch SP' used for the spin caulking method is provided nearly at the center of the rotation, the root portion thereof is mounted eccentrically to ensure more robustness in the rounded portion to be deformed 92'. The spin caulking method offers excellent high-temperature strength because the rounded and crushed deformed portion 95' provides a robust contact between an element to be caulked 91' such as the shaft portion 12 of the adjustable blade 1 and an element to be attached 93' (caulking receiving hole 94').

However, caulking one location at a time is common with the spin caulking method as a result of caulking achieved by rotating the caulking punch SP'. Therefore, the more locations to be caulked, the more forming time is required, resulting in poor workability.

### (ii) Press Caulking Method

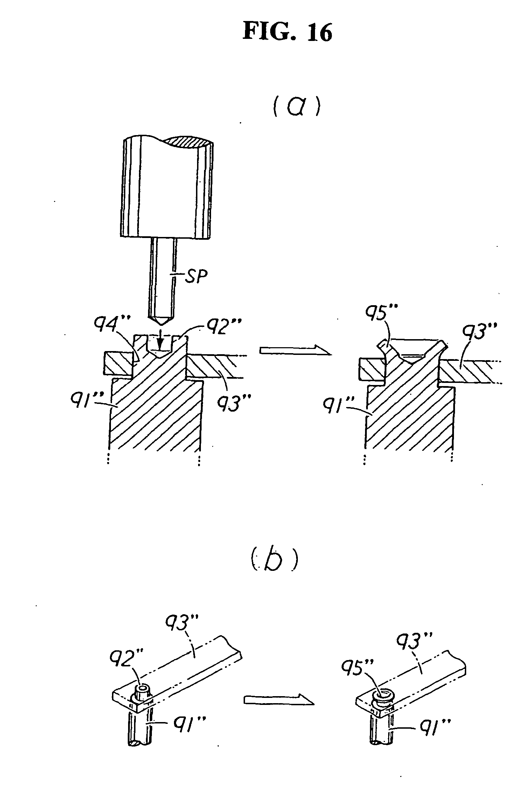

On the other hand, there exists the press caulking method that allows concurrent caulking of a plurality of locations as opposed to the spin caulking method. The press caulking method-achieves linkage with a caulking receiving hole 94" by first causing a portion to be deformed 92" to penetrate through a caulking receiving hole 94" first, then causing the caulking punch SP to press only axially against an element to be caulked 91" and, for example, expanding the portion to be deformed 92" therearound, for example as shown in Figs. 16. However, the press caulking method is inferior to the spin caulking method in terms of adhesion of a deformed portion 95" to the caulking receiving hole 94" as a result of formation of the deformed portion 95" only by the pressing operation of the caulking punch SP. While the press caulking method is superior in terms of mass productivity, it has been generally impossible for the method to secure caulking strength under high-temperature conditions. In light of the above, this embodiment is designed to provide improved high-temperature strength while adopting the press caulking method.

Thus, this embodiment employs the press caulking method and is a preferred joining method for portions between which rotation must be reliably transferred after caulking. The component members to be joined are not limited to the adjustable blade 1 and the driven element 32B and include, for example, the portion for linking the pin for rotatably holding the driving element 32A with the rotation member 31 and the caulking pin 26 and the pin insertion hole 27. A description will be given here of joining of the adjustable blade 1 and the driven element 32B as an example.

### (I) Definition of Names Related to Caulking

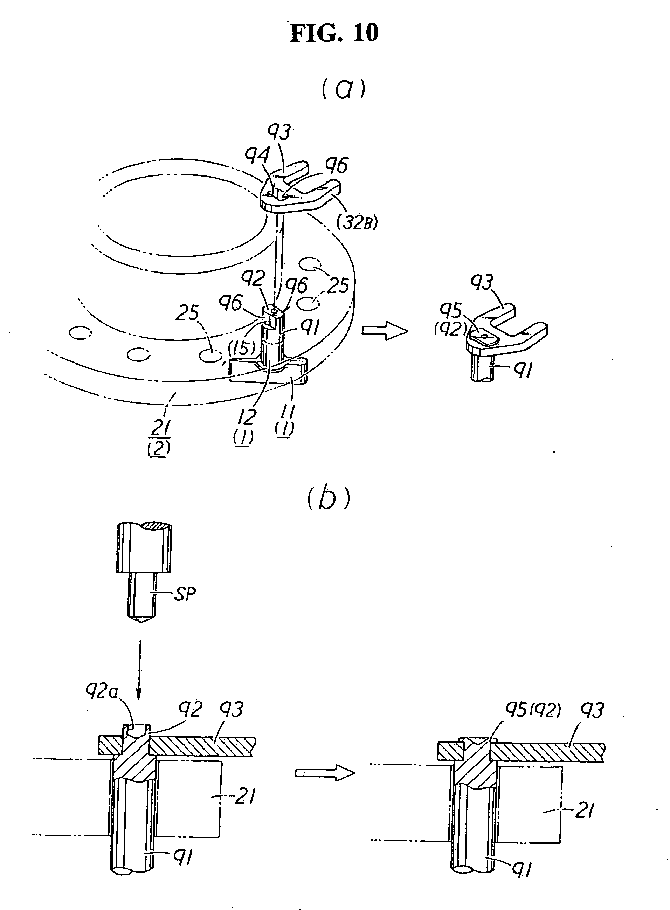

Caulking achieves joining by inserting the shaft portion 12 of the adjustable blade 1 into the receiving hole 25 of the frame segment 21 first, fitting the tip (the reference surface 15) of the shaft portion 12 caused to project therefrom into the receiving hole of the driven element 32B and pounding, busting or crushing and expanding the tip portion of the shaft portion 12 by the pressing operation of the caulking punch, for example as shown in Figs. 10. Since the adjustable blade 1 and the driven element 32B are merely an example of component members that need to be linked, the names of components are defined in terms of caulking function. First, the member (before deformation) that is crushed or otherwise deformed by the pressing operation of the caulking punch SP is defined as an element to be caulked 91 (the adjustable blade 1 in this case), and the tip portion substantially deformed therein by the caulking punch SP is defined as a portion to be deformed 92. On the other hand, the member (plate-shaped member) fixed by caulking by the element to be caulked 91 is defined as an element to be attached 93 (the driven element 32B in this case), and the hole opened thereby for accepting the portion to be deformed 92 is defined as a receiving hole 94. Further, the portion to be deformed 92 that has been deformed as a result of crushing or expansion by the caulking punch SP after caulking is defined as a deformed portion 95.

### (II) Shapes Related to Caulking

In the embodiment shown in Figs. 10, the portion to be deformed 92 is formed into the shape of a drum (double-cut shape) in which two axially opposing surfaces of the circular cross section are cut out. The receiving hole 94 is also formed into substantially the same shape so as to accept the portion to be deformed 92. In this embodiment, a concave portion 92a is formed nearly at the center of the portion to be deformed 92. The concave portion 92a is formed so as to be expanded therearound or crushed only by the pressing operation of the caulking punch SP to ensure a robust contact with the receiving hole 94 (refer to Fig. 10(b)).

Thus, this embodiment forms the portion to be deformed 92 and the receiving hole 94 into the engageable double-cut shape, thus allowing engagement between the notched surfaces and reliably transmitting rotation (torque) of the element to be attached 93 to the element to be caulked 91 (the adjustable blade 1) after caulking. The cut-out surfaces contributing to transmission of rotation are referred to as engagement portions 96 in the present specification. In this embodiment, the hollow-shaped concave portion 92a is formed nearly at the center of the portion to be deformed 92. This structure, designed to facilitate deformation (e.g., pounding, busting or crushing, expansion) of the portion to be deformed 92 by caulking, can be formed as appropriate in accordance with the size and shape of the portion to be deformed 92, the pressing force of the caulking punch SP, the adhesion force of the deformed portion 95 and so on. That is, to obtain a robust adhesion force by primarily crushing the portion to be deformed 92 with the caulking punch SP, one may choose not to form the concave portion 92a.

It is to be noted that the portion to be deformed 92 and the receiving hole 94 can take on not only the double-cut shape (the shape of opposing notches) but also various other shapes. For example, they may have a D-shaped cross section (cross section as seen from the direction of accepting the portion to be deformed 92) in which the circular cross section is only partially notched. In this case, the flatly cut-out surface becomes the engagement portions 96.

In addition to the above, it is possible to form asperities around the portion to be deformed 92 (so-called star-shaped cross section) and the receiving hole 94 in response thereto. Naturally, the engagement portions 96 in this case are the asperity portions formed between the outer periphery of the portion to be deformed 92 and the inner periphery of the receiving hole 94.

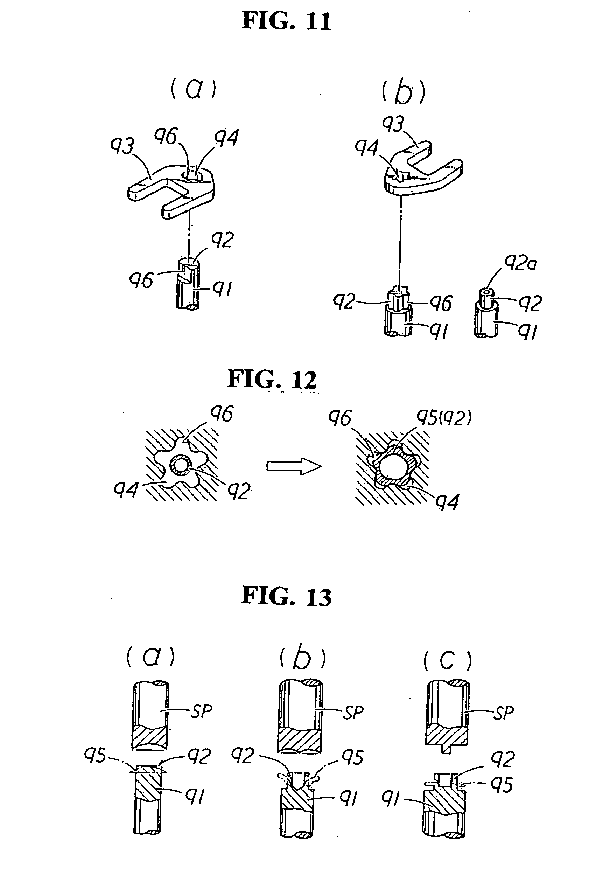

The portion to be deformed 92 and the receiving hole 94 need not always take on substantially the same mating shape. In the case of a star-shaped cross section as shown in Fig. 11(b), for example, it is possible to form the portion to be deformed 92 in a cylindrical shape having the concave portion 92a and deform the portion to be deformed 92 by the pressing of the caulking punch SP so as to mainly expand as shown in the figure, thus ensuring a robustly close contact between the portion to be deformed 92 and the receiving hole 94. If such an embodiment is adopted, the portion to be deformed 92 is expanded by the caulking punch SP so as to go into the asperities of the receiving hole 94 for example as shown in Fig. 12, thus imparting a robust adhesion force to the deformed portion 95. In this case, therefore, the asperities serving as the engagement portions 96 are formed only on the receiving hole 94. The engagement portions 96 are not formed on the portion to be deformed 92 particularly prior to caulking.

Thus, in this embodiment, the engagement portions 96 for reliably transmitting rotation after caulking are provided on either the portion to be deformed 92 or the receiving hole 94 or both thereof, thus increasing the adhesion force of the deformed portion 95 despite only the uniaxial pressing operation of the caulking punch SP.

### (III) Shape of Caulking Punch

The embodiment in Figs. 10 shows that the tip portion of the caulking punch is formed in the shape of an acute angle and approximately conical as a whole. This structure is suited for expanding mainly the portion to be deformed 92 by the pressing operation of the caulking punch. Naturally, while the portion to be deformed 92 may be not only thus expanded but also pounded or crushed, the caulking punch SP can take on various shapes depending mainly on how the portion to be deformed 92 is to be deformed or what kind of shape the portion is to be deformed into. More specifically, the caulking punch SP can take on the cross sectional shapes as shown in Figs. 13. In the case of the shape shown in Fig. 13(a) in which the tip portion is formed in a curved concave shape, the caulking punch SP can deform the portion to be deformed 92 so as to round the portion (alternating long and short dashed line in the figure). In the case of the shape shown in Fig. 13(b), the caulking punch SP can deform the portion to be deformed 92 having the concave portion 92a so as to bend the portion toward the outer periphery (so as to warp the portion) as shown by the alternating long and short dashed line. Further, in the case of the shape shown in Fig. 13(c) in which a protrusion is formed on the pressing tip portion, the caulking punch SP can deform the portion to be deformed 92 having the concave portion 92a so as to expand the portion in the circumferential direction while crushing. Thus, while the acting tip portion of the caulking punch SP can be formed into an appropriate shape, the pressing stroke thereof can be set so as to deform the portion to be deformed 92 as appropriate.

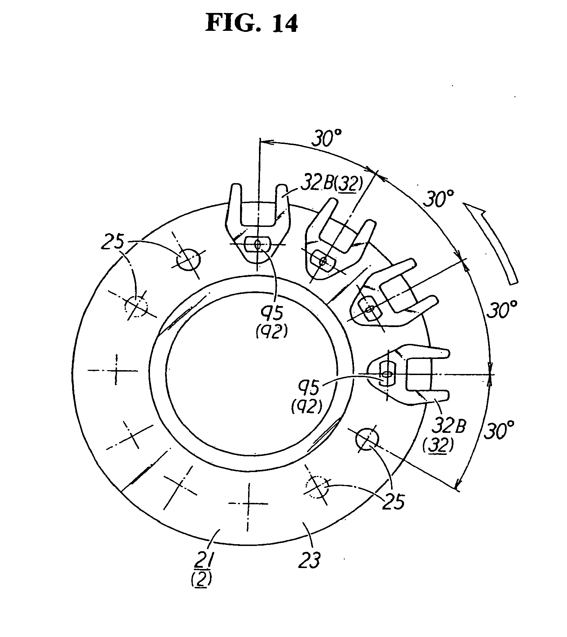

In this embodiment, a plurality of locations can be concurrently caulked by using the press caulking method, thus contributing to improved productivity of the exhaust gas guide assembly A. On the other hand, in the case where locations to be caulked are aligned equidistantly along the circumference as in the case of the adjustable blades 1 and the driven elements 32B, it is preferred that an indexing mechanism be incorporated that readily performs positioning at a plurality of locations to be caulked by rotating a jig or table, on which the frame segment 21, etc. is placed, by an angular increment at a time through the plurality of locations to be caulked concurrently. More specifically, if the adjustable blades 1 are arranged at 12 locations along the circumference of the frame segment 21 as shown in Fig. 14, caulking is performed at intervals of 30° (360 ÷ 12). If, in this case, concurrent caulking is performed at four locations at a time, it suffices to ensure that the frame segment 21 rotates 120° (30° x 4) at a time for further efficient caulking. Naturally, at this time, it is possible to adopt a structure that allows the frame segment 21 to rotate 30° - the smallest caulking interval - at a time. As a matter of course, this allows 120° rotation at four locations at a time, making the arrangement particularly applicable to the case in which there is a fraction in the number of locations to be caulked.

The press caulking method, for example, requires no space for turning the caulking punch SP, making it possible to perform caulking within a relatively small space and configure the adjusting mechanism 3 (link mechanism) of a relatively small diameter. This contributes to downsizing of the exhaust gas guide assembly A, the VGS turbocharger and so on.

As for the effect of the various exemplary methods and products described herein, the receiving hole 25 of the frame segment 21 for rotatably holding the adjustable blade 1 is finished by pressing the steel ball B, thus requiring no time-consuming machining and thereby allowing efficient finishing adapted to the needs of actual mass production systems. This further stabilizes the rotation of the adjustable blades 1, thus contributing to improved performance of the exhaust gas guide assembly and, by extension, the turbocharger.

Further, according to other examples, the steel ball B is formed integrally at the tip of the punch portion PU, in other words, the steel ball B is formed by forming the acting tip portion of the punch portion PU in a spherical shape, thus making the steel ball B easier to handle and ensures, for example, reduced time for steel ball detachment/reattachment. Additionally, integral formation of the steel ball B and the punch portion PU facilitates the reciprocating motion of the steel ball B during finishing of the receiving holes 25.

As described above, it is possible to efficiently form the preparatory holes 25a of a desired accuracy on the shaped material W, completely eliminating machining from manufacturing steps of the adjustable blades 1.

As described above, the relatively convex portions Ba are formed on the side portions of the steel ball B for thrusting away the excess metal in the centrifugal direction, and the steel ball B is inserted while being rotted during finishing of the receiving holes 25, thus allowing finishing to be carried out more effectively as the push-away effect by pressing of the steel ball B and the push-away effect by rotation of the convex portions Ba come into play together.

As described above, the receiving holes 25 for rotatably holding the adjustable blades 1 are finished by forming the preliminary holes 25b first, then reforming the preliminary holes 25b into the preparatory holes 25a and further pressing the steel ball B thereinto, thus requiring absolutely no time-consuming machining and thereby making mass production of the turbine frame 23 feasible. This further stabilizes the rotation of the adjustable blades 1, thus contributing to improved performance of the exhaust gas guide assembly and, by extension, the turbocharger.

As described above, the preparatory holes 25a are formed (reformed) by the FB performed on the preliminary holes 25b smaller to some degree in diameter than the preparatory holes 25a, reducing the load imposed on the precision press device 6 for performing the FB and allowing concurrent forming of the preparatory holes 25a at about 10 to 15 locations.

As described above, it is possible to form the preliminary holes 25b in the step of forming the shaped material W of the frame segment 21, thus contributing to reduced step count. It is also possible, during formation of the preparatory holes 25a, to concurrently form the plurality of preparatory holes 25a, for example, by performing the FB on the preliminary holes 25b. Further, the receiving holes 25 are completed by pressing the steel ball B into the preparatory holes 25a, completely eliminating machining from the step of forming the frame segment 21 and thereby making mass production of the frame segment 21 further feasible.

As described above, it is possible to manufacture component members of the exhaust gas guide assembly A with high accuracy, thus minimizing the post-assembly tolerance (tolerance in assembled state) arising based mainly on the dimensional accuracy of discrete parts. This can also prolong the durability life of die members such as the punch 71 and the die 72.

As described above, the taper surface TS1 is formed on the cutting edge C of the punch 71, distributing stress acting on the cutting edge C in the axial direction of the punch 71 and in the direction orthogonal thereto during shearing of the workpiece WK for further prolonged life of die members.

As described above, a plurality of forming tasks such as blanking out of the blank BL and forming of holes in the blanked blank BL can be carried out in a single pressing stroke of the punch 71, allowing efficient formation of component members of the assembly and thereby making mass production of the exhaust gas guide assembly A even more feasible.

As described above, the taper surface TS2 is formed on the guide portion 82a of the die 82, properly distributing considerable stress load, believed to act on the punch 81 and the die 82 during forming due to the fact that the work W is made of an extremely difficult-to-form metal material, and providing improved durability to the die.

As described above, the processing speed is controlled at low speeds during heading and the punch 81 is retained at the lower dead position once, thus allowing high-accuracy forming of the pin-shaped member PI and further reducing wear on the die.

As described above, a relatively thick oxalate coating of 5 to 10 µm is formed on an elongated metal raw material prior to heading, effectively reducing friction between the workpiece WK and the die members (the punch 81 and the die 82) during heading and providing further improved ease of heading. This also makes more feasible heading of difficult-to-process materials such as heat-resistant stainless steel.

As described above, the engagement portions 96 are formed on the portion to be deformed 92 or the receiving hole 94, reliably maintaining rotational torque after caulking and preventing reduced caulking strength under high-temperature conditions.

As described above, the portion to be deformed 92 and the receiving hole 94 having the engagement portions 96 can be formed substantially in the same shape relative to the accepting direction (axial direction), more reliably maintaining rotational torque after caulking and caulking strength under high-temperature conditions.

As described above, a proper shape and stroke of the caulking punch SP are set so as to ensure a more robustly close contact between the portion to be deformed 92 and the receiving hole 94, reducing the pressing force needed to deform the portion to be deformed 92 and thereby achieving smooth and reliable linkage.

As described above, the press caulking method with enhanced high-temperature strength is used for joining the adjustable blades 1 and the driven elements 32B (transmission members 32) for rotating the adjustable blades 1, ensuring precision and reliability in proper flow rate control of the exhaust gas G and contributing to improved performance of the exhaust gas guide assembly A and, by extension, the VGS turbocharger.

As described above, it is possible to completely eliminate time-consuming machining from all steps of manufacturing component members that make up the VGS turbocharger, ensuring stable supply of mass-produced component members.

As described above, mass production of the exhaust gas guide assembly A and the VGS turbocharger with excellent heat resistance and high accuracy is feasible. It is also possible to ensure accuracy and reliability in flow rate adjustment of the exhaust gas G.

As described above, the present invention is capable of efficiently performing a press forming when the manufacture of the component member in the VGS turbocharger is performed by the press forming using a die by various engineering improvements applied thereto and is suited to making feasible mass production of the component member and, by extension, the VGS turbocharger having the component member incorporated therein.

## Claims

1. A method of manufacturing a component member for a VGS turbocharger of the type which comprises an exhaust gas guide assembly (A) in which a plurality of adjustable blades (1) are rotatably held at the outside of an outer periphery of an exhaust turbine wheel (T), the exhaust gas guide assembly being incorporated in the VGS turbocharger, and in which exhaust gas (G) discharged from an engine at a relatively low flow rate is suitably throttled by the adjustable blades (1) to increase the velocity of the exhaust gas (G) so that the exhaust turbine wheel (T) is rotated by energy of the exhaust gas (G) and a compressor directly coupled to the exhaust turbine wheel (T) feeds more air into the engine than is fed into it by natural suction, whereby a high output power of the engine is obtained at low rotational speeds, wherein:
in manufacturing a component member of the exhaust gas guide assembly (A),
the component member includes an element to be caulked (91) and an element to be attached (93) which are subjected to press-caulking; and
when the elements are joined together, a portion to be deformed (92) of the element to be caulked (91) is inserted into a receiving hole (94) of the element to be attached (93) to penetrate therethrough and then is deformed by a pressing operation of a caulking punch (SP) so as to come into close contact with the receiving hole (94); and wherein
either one or both of the portion to be deformed (92) and the receiving hole (94) is provided thereon with an engagement portion (96) which is formed in advance and which is arranged to engage with the other of the portion to be deformed (92) and the receiving hole (94) after caulking to transmit rotation between the elements,
wherein the pressing operation of the caulking punch (SP) is carried out in such a manner as to press the caulking punch (SP) only axially against the portion to be deformed (92); and
the receiving hole (94) has a non-circular shape in cross section which is arranged to engage an inner, surface thereof with the portion to be deformed (92) of the element (91) inserted in the receiving hole (94) after caulking so as to provide said rotation transmission between the elements (91, 93).

2. A method of manufacturing a component member for a VGS turbocharger as claimed in claim 1, wherein:
the portion to be deformed (92) and the receiving hole (94) are formed to have substantially the same mating shape.

3. A method of manufacturing a component member for a VGS turbocharger as claimed in claim 1 or 2, wherein:
the pressing stroke and a shape of a pressing end of the caulking punch (SP) are set depending on the form of deformation of the portion to be deformed (92).

4. A method of manufacturing a component member for a VGS turbocharger as claimed in claim 1, 2, or 3, wherein:
the element to be caulked (91) is a shaft portion (12) of the adjustable blade (1); and
the element to be attached (93) is a transmission member (32) for turning the adjustable blade (1) by an appropriate angle.

5. A component member for a VGS turbocharger which is so constructed that a plurality of adjustable blades (1) are rotatably held at the outside of an outer periphery of an exhaust turbine wheel (T), the component member being incorporated, in use, in the VGS turbocharger,
wherein the VGS turbocharger is of the type in which exhaust gas (G) discharged from an engine at a relatively low flow rate is suitably throttled by the adjustable blades (1) to increase the velocity of the exhaust gas (G) so that the exhaust turbine wheel (T) is rotated by energy of the exhaust gas (G) and a compressor directly coupled to the exhaust turbine wheel (T) feeds more air into the engine than is fed into it by natural suction, whereby a high output power of the engine is obtained at low rotational speeds, whereby the component member includes an element to be caulked (91) and an element to be attached (93) which are subjected to press-caulking and
the component member is manufactured by the manufacturing method according to any one of claims 1 to 4, and
wherein the receiving hole (94) has a non-circular shape in cross section to form the engagement portion (96) on an inner surface thereof which engages, in use, with the portion (92) of the caulked element (91) inserted in the receiving hole (94) so as to transmit rotation between the caulked element (91) and the attached element (93).

## Patentansprüche

1. Verfahren zur Herstellung eines Komponentenelements für einen VGS-Turbolader von der Art, welche eine Abgasführungsanordnung (A) aufweist, in der eine Anzahl einstellbarer Blätter bzw. Turbinenschaufeln (1) drehbar an der Außenseite einer äußeren Peripherie eines Abgasturbinenrades (T) gehalten werden, wobei die Abgasführungsanordnung in dem VGS-Turbolader integriert ist, und in welcher von einem Motor mit einer relativ geringen Flussrate ausgestoßenes Abgas in geeigneter Weise durch die einstellbaren Turbinenschaufeln (1) gedrosselt wird, um die Geschwindigkeit des Abgases (G) zu erhöhen, so dass das Abgasturbinenrad (T) durch Energie des Abgases (T) gedreht wird und ein Kompressor, der direkt mit dem Abgasturbinenrad (T) verbunden ist, mehr Luft in den Motor einbringt, als in jenen durch natürlichen Sog eingebracht wird, wodurch eine hohe Ausgangsleistung des Motors bei geringen Drehgeschwindigkeiten erhalten wird, wobei:
bei der Herstellung eines Komponentenelements der Abgasführungsanordnung (A)
das Komponentenelement ein abzudichtendes bzw. zu verstemmendes Element (91) und ein anzubringendes Element (93) beinhaltet, welche einem Druckabdichten unterworfen werden; und
wenn die Elemente miteinander verbunden werden, ein zu deformierender Abschnitt (92) des abzudichtenden Elements (91) in ein Aufnahmeloch (94) des anzubringenden Elements (93) eingesetzt wird, um hierdurch zu dringen und dann durch einen Druckvorgang eines Abdicht-Presswerkzeugs (SP) deformiert wird, um hierdurch in engen Kontakt mit dem Aufnahmeloch (94) zu kommen; und wobei
der zu deformierende Abschnitt (92) und/oder das Aufnahmeloch (94) mit einem Eingriffsabschnitt (96) hierauf versehen ist, welcher jeweils zuvor ausgebildet wurde, und welcher dazu eingerichtet ist, das jeweils andere Element nach dem Abdichten zu beaufschlagen, um eine Rotation zwischen den Elementen zu übertragen.
wobei der Druckvorgang des Abdicht-Druckwerkzeugs (SP) in einer derartigen Weise ausgeführt wird, dass das Abdicht-Druckwerkzeug (SP) nur axial gegen den zu deformierenden Abschnitt (92) gedrückt wird; und
das Aufnahmeloch (94) eine nichtkreisförmige Querschnittsform aufweist, welche dazu eingerichtet ist, eine innere Oberfläche hiervon mit dem zu deformierenden Abschnitt (92) des in das Aufnahmeloch (94) eingefügten Elementes (91) nach dem Abdichten zu beaufschlagen, um die Rotationsübertragung zwischen den Elementen (91, 93) bereitzustellen.

2. Verfahren zur Herstellung eines Komponentenelements für einen VGS-Turbolader nach Anspruch 1, wobei:
der zu deformierende Abschnitt (92) und das Aufnahmeloch (94) so geformt sind, dass sie im Wesentlichen die gleiche Passform aufweisen.

3. Verfahren zur Herstellung eines Komponentenelements für einen VGS-Turbolader nach Anspruch 1 oder 2, wobei:
der Druckhub und eine Form eines Druckendes des Abdicht-Druckwerkzeugs (SP) in Abhängigkeit von der Form der Deformation des zu deformierenden Abschnittes (92) eingestellt werden.

4. Verfahren zur Herstellung eines Komponentenelements für einen VGS-Turbolader nach Anspruch 1, 2 oder 3, wobei
das abzudichtende Element (91) ein Schaftabschnitt (12) der einstellbaren Turbinenschaufel (1) ist; und
das anzubringende Element (93) ein Transmissionselement (32) zum Drehen der einstellbaren Turbinenschaufel (1) um einen geeigneten Winkel ist.

5. Komponentenelement für einen VGS-Turbolader, welches so konstruiert ist, dass eine Anzahl einstellbarer Blätter bzw. Turbinenschaufeln (1) drehbar an der Außenseite einer äußeren Peripherie eines Abgasturbinenrads (T) gehalten werden, wobei das Komponentenelement bei der Verwendung in dem VGS-Turbolader integriert ist,
wobei der VGS-Turbolader von der Art ist, bei der von einem Motor mit relativ geringer Flussrate ausgestoßenes Abgas (G) in geeigneter Weise durch die einstellbaren Turbinenschaufeln (1) gedrosselt wird, um die Geschwindigkeit des Abgases (G) zu erhöhen, so dass das Abgasturbinenrad (T) durch Energie des Abgases (G) gedreht wird, und ein direkt mit dem Abgasturbinenrad (T) verbundener Kompressor mehr Luft in den Motor einbringt, als in jenen durch natürlichen Sog eingebracht wird, wodurch eine hohe Ausgangsleistung des Motors mit geringen Drehgeschwindigkeiten erhalten wird, wodurch das Komponentenelement ein abzudichtendes Element (91) und ein anzubringendes Element (93) beinhaltet, die einer Druckabdichtung bzw. Verstemmung unterworfen werden, und
das Komponentenelement durch das Herstellungsverfahren nach einem der Ansprüche 1 bis 4 hergestellt wird, und
wobei das Aufnahmeloch (94) eine nichtkreisförmige Querschnittsform zur Bildung des Eingriffsabschnitts (96) auf einer Innenoberfläche hiervon aufweist, welche bei der Verwendung den Abschnitt (92) des abgedichteten Elements (91), der in das Aufnahmeloch (94) eingeführt ist, beaufschlagt, um eine Rotation zwischen dem abgedichteten Element (91) und dem angebrachten Element (93) zu übertragen.

## Revendications

1. Procédé de fabrication d'un élément constitutif d'un turbocompresseur VGS du type comprenant un guide des gaz d'échappement (A) dans lequel une pluralité de lames réglables (1) sont maintenues en rotation à l'extérieur d'une périphérie externe d'une roue de turbine d'échappement (T), le guide de gaz d'échappement étant incorporé dans le turbocompresseur VGS, et où le gaz d'échappement (G) sortant d'un moteur à un débit relativement faible est ralenti par les lames réglables (1) pour augmenter la vitesse du gaz d'échappement (G) de sorte que la roue de turbine d'échappement (T) soit entraînée en rotation par l'énergie du gaz d'échappement (G) et où un compresseur directement couplé à la roue de turbine d'échappement (T) introduit plus d'air dans le moteur que ce qui est introduit dans lui par aspiration naturelle, par laquelle une grande puissance de sortie du moteur est obtenue à de basses vitesses de rotation, où:
en fabriquant un élément constitutif du guide des gaz d'échappement (A),
l'élément comporte un élément à sertir (91) et un élément à fixer (93) qui sont soumis au sertissage par presse, et
quand les éléments sont joints ensemble, une partie à déformer (92) de l'élément à sertir (91) est insérée dans un trou de réception (94) de l'élément à fixer (93) pour y pénétrer et alors est déformée par un processus de compression à l'aide d'un poinçon de sertissage (SP) afin de venir en contact étroit avec le trou de réception (94), et où
soit l'un ou les deux parmi la partie à déformer (92) et le trou de réception (94) sont équipés sur le dessus d'une partie d'enclenchement (96) qui est formée à l'avance et qui est prévue pour s'engager dans l'autre parmi la partie à déformer (92) et le trou de réception (94) après le sertissage afin de transmettre la rotation entre les éléments,
le trou de réception (94) a une section non circulaire qui est prévue pour engager une surface intérieure de celui-ci avec la partie à déformer (92) de l'élément (91) inséré dans le trou de réception (94) après le sertissage afin de permettre ladite transmission en rotation entre les éléments (91, 93).

2. Procédé de fabrication d'un élément constitutif d'un turbocompresseur du type VGS selon la revendication 1, où la partie à déformer (92) et le trou de réception (94) sont formés pour avoir sensiblement la même forme d'accouplement.

3. Procédé de fabrication d'un élément constitutif d'un turbocompresseur du type VGS selon l'une des revendications 1 ou 2, où la course de pressage et une forme d'une extrémité de pressage du poinçon de sertissage (SP) sont placées selon la forme de déformation de la partie à déformer (92).

4. Procédé de fabrication d'un élément constitutif d'un turbocompresseur du type VGS selon l'une des revendications 1, 2, ou 3, où l'élément à sertir (91) est une partie d'axe (12) de la lame réglable (1); et l'élément à fixer (93) est un organe de transmission (32) pour tourner la lame réglable (1) d'un angle approprié.

5. Elément constitutif d'un turbocompresseur du type VGS qui est ainsi construit qu'une pluralité de lames réglables (1) sont maintenues en rotation à l'extérieur d'une périphérie externe d'une roue de turbine d'échappement (T), l'élément constitutif étant incorporé, en fonctionnement, dans le turbocompresseur VGS,
où le turbocompresseur VGS est du type dans lequel le gaz d'échappement (G) sortant d'un moteur à un débit relativement faible est convenablement ralenti par les lames réglables (1) pour augmenter la vitesse du gaz d'échappement (G) de sorte que la roue de turbine d'échappement (T) soit entraînée en rotation par l'énergie du gaz d'échappement (G) et un compresseur directement couplé à la roue de turbine d'échappement (T) introduit plus d'air dans le moteur que ce qui est introduit dans lui par aspiration naturelle, par laquelle une grande puissance de sortie du moteur est obtenue à de basses vitesses de rotation,
où l'élément constitutif comporte un élément à sertir (91) et un élément à fixer (93) qui sont soumis au sertissage par presse, et
l'élément constitutif est fabriqué par un procédé de fabrication selon l'une des revendications 1 à 4 et,
où le trou de réception (94) a une section non circulaire réalisant la partie d'enclenchement (96) sur une surface intérieure de celui-ci qui engage, en fonctionnement, avec la partie à déformer (92) de l'élément à sertir (91) inséré dans le trou de réception (94) afin de transmettre la rotation entre l'élément à sertir (91) et l'élément à fixer (93).
